(19) Europäisches Patentamt
European Patent Office
Office européen des brevets

(11) **EP 2 211 486 B1**

(12) **EUROPEAN PATENT SPECIFICATION**

(45) Date of publication and mention
of the grant of the patent:
**09.01.2013 Bulletin 2013/02**

(51) Int Cl.:
***H04B 7/185*** *(2006.01)*     ***G08G 3/00*** *(2006.01)*

(21) Application number: **09250993.4**

(22) Date of filing: **31.03.2009**

(54) **Satellite detection of automatic identification system signals**

Satellitendetektion von automatischen Identifikationssystemsignalen

Détection par satellite de signaux automatiques de système d'identification

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.01.2009 US 360473**

(43) Date of publication of application:
**28.07.2010 Bulletin 2010/30**

(73) Proprietor: **Com Dev International Limited Cambridge ON N1R 7H6 (CA)**

(72) Inventors:
• **Cowles, Phillip R.
Cambridge
Ontario N1S 1R5 (CA)**
• **D'Souza, Ian A.
Waterloo
Ontario N2K 4B7 (CA)**
• **Peach, Robert C.
Cambridge
Ontario N1S 4B3 (CA)**

(74) Representative: **Bradford, Victoria Sophie
Reddie & Grose LLP
16 Theobalds Road
London
WC1X 8PL (GB)**

(56) References cited:
WO-A-03/046603     WO-A-2007/143478
WO-A-2008/148188

• **OLE FREDERIK HAAKONSEN DAHL: "Space-based AIS receiver for maritime traffic monitoring using interference cancellation", MASTER OF SCIENCE IN COMMUNICATION TECHNOLOGY, [Online] pages 1-107, XP002581810, Retrieved from the Internet: URL:http://ntnu.diva-portal.org/smash/get/ diva2: 121772/FULLTEXT01> [retrieved on 2010-05-11]**

**Description**

<u>FIELD</u>

Embodiments described herein relate to systems and methods for decoding Automatic Identification System signals. More particularly, embodiments described herein relate to systems and methods for monitoring ships that send Automatic Identification System signals by receiving the signals with low earth orbit satellites, transmitting the signals to ground and decoding the signals using high performance computing techniques.

<u>BACKGROUND</u>

The Automatic Identification System (AIS) is a maritime communications system designed for short-range (typically 20-30 nautical miles) ship-to-ship and ship-to-shore communications. The AIS system uses narrowband (i.e. 25 kHz Bandwidth) Very High Frequency (VHF) channels centered at 161.975 MHz and 162.025 MHz, with a possible additional channel at 157.375 MHz, and a communication method called Self-Organizing Time Division Multiple Access (SOTDMA).

The AIS system supports a number of different types of signal. The principal AIS signal sent by a ship is a position report that provides information pertaining to the ship's identification, location, course, speed, and other details. The AIS also includes the use of a receiver, enabling a ship to receive AIS signals emitted by ships around it. Each minute, each VHF channel is divided into 2,250 time slots, each of which can accommodate one 26.67 ms AIS transmission (i.e. AIS signal). The time slots are accurately synchronized to Coordinated Universal Time (UTC), typically using Global Positioning System (GPS), and each AIS unit reserves time slots for future AIS transmissions from the ship. Other AIS units within range can therefore maintain a map of reserved slots and avoid transmitting during these intervals. This self-organizing feature avoids signal collisions over the short ranges involved in surface transmissions.

The use of AIS is now mandatory on all ships over 300 tons engaged on international voyages, and it is also being extended to other vessels. It was originally conceived as an aid to navigation and safety, and also has potential security

The use of AIS is now mandatory on all ships over 300 tons engaged on international voyages, and it is also being extended to other vessels. It was originally conceived as an aid to navigation and safety, and also has potential security applications for monitoring maritime traffic. AIS signal detection could be achieved using coastal/ground stations, but the limited range of the VHF signals would require such coastal/ground stations to be situated at many locations along the coast, and even then they could only monitor the immediate coastal region.

WO 2008/148188 describes a system and method for detecting AIS signals in space and decoding those signals. WO 2007/143378 describes a space-based system to simultaneously track and monitor one or more ocean going vessels at any point on the earth. The system includes a plurality of satellites, with each satellite including an AIS communications payload to receive AIS signals. WO 03/046603 describes a satellite system for vessel identification, including means for sending an inbound message from a ship, via at least one geostationary satellite and base station, to a control centre. The document "Space-Based AIS Receiver for Maritime Traffic Monitoring Using Interference Cancellation" by Ole Fredrik Haakonsen Dahl describes the problem of interference between AIS messages from different ships and how cancelling one or more signals in the receiver can cause the detection probability to increase. Receiver solutions to reduce the interference problem by utilizing antenna diversity are examined along with the signal environment and the potential for interference cancellation.

<u>SUMMARY</u>

According to a first aspect of the invention, there is provided a system for detecting and decoding Automatic Identification System "AIS" signals, the system comprising: (a) a plurality of orbital satellites, each orbital satellite having at least one antenna, the at least one antenna having a plurality of antenna polarizations for receiving a plurality of phase-shifted radio frequency signals, the radio frequency signals comprising one or more AIS message signals; (b) each orbital satellite also having a communication module configured to: (i) accept the plurality of phase-shifted radio frequency signals, (ii) convert the plurality of phase-shifted radio frequency signals into sampled packetized, (iii) insert the sampled packetized data and a plurality of signal parameters into a data stream, and (iv) transmit the data stream and a telemetry data stream for the orbital satellite to at least one ground station. A processor located at the at least one ground station is configured to receive the data stream and correlate the data stream with a plurality of predefined signals to compute a plurality of correlation signals; and scan the plurality of correlation signals for correlation peaks that exceed other peaks by a predetermined amount to identify one or more candidate AIS message signals. The processor comprises:

(i) a refining module configured to identify and remove one or more superimposed AIS message signals, the one or more superimposed AIS message signals being one or more candidate AIS message signals superimposed by a candidate message signal whose correlation peak exceeds that of the one or more candidate AIS message signals by a predetermined threshold value; (ii) a decollision module configured to decollide the one or more superimposed AIS message signals by for each candidate AIS message signal in the one or more superimposed AIS message signals, computationally phase-shifting a first sampled signal segment of the one or more superimposed AIS message signals and combining with a second sampled signal segment of the one or more superimposed AIS message signals until the phase-shift in the second segment cancels, or reduces the relative strength of, an overlapping AIS message signal to reveal the candidate AIS message signal, wherein the second sampled signal segment is co-incident in time with the first sampled segment but received at a different antenna or different antenna polarization; and (iii) a decoder configured to decode the one or more candidate AIS message signals to obtain an AIS message segment

In some embodiments, the processor also determines the accuracy of the one or more candidate AIS message signals by comparing a reported position of an AIS transmitter, the reported position being identified in the one or more candidate AIS message signals, to a plurality of valid positions based on one or more of a Doppler offset, a polarization, a timestamp and the telemetry data associated with the one or more candidate AIS message signals.

[Removed]

In some embodiments, the processor also extracts a plurality of extracted parameters from the sampled packetized data, wherein the plurality of extracted parameters are selected from the group at least consisting of: a modulation index, signal amplitudes for each of the at least one antenna polarization of the at least one antenna, and phase offsets between the signals received by each of the at least one antenna polarization of the at least one antenna when a plurality of antenna polarizations or a plurality of antennas or both are employed. The plurality of antenna polarizations may comprise dual polarizations. The plurality of antenna polarizations may comprise three polarizations.

The processor may be a High Performance Computing cluster. In some embodiments, the plurality of orbital satellites occupies at least three different orbital planes, each of the three orbital planes having substantially different inclinations and/or substantially different altitudes. In some embodiments, the data stream is encrypted for transmission to at least one ground station.

According a second aspect of the invention, there is provided a method for detecting and decoding Automatic Identification System "AIS" signals, the method comprising: (a) providing a plurality of orbital satellites, each orbital satellite having at least one antenna the at least one antenna having a plurality of antenna polarizations for receiving a plurality of phase-shifted radio frequency signals, the radio frequency signals comprising one or more AIS message signals; (b) filtering, sampling and packetizing the plurality of phase-shifted radio frequency signals into sampled packetized data; (c) inserting the sampled packetized data and a plurality of signal parameters into a data stream; (d) transmitting the data stream and a telemetry data stream for the orbital satellite to at least one ground station; (e) receiving the data stream at the at least one ground station; (f) correlating the data stream with a plurality of predefined signals to compute a plurality of correlation signals; (g) scanning the plurality of correlation signals for correlation peaks that exceed other peaks by a predetermined amount to identify one or more candidate AIS message signals; and (h) processing the data stream at the at the at least one ground station to identify one or more candidate AIS message signals, wherein the processing comprises identifying and removing one or more superimposed AIS message signals, the one or more superimposed AIS message signals being one or more candidate AIS message signals superimposed by a candidate message signal whose correlation peak exceeds that of the one or more candidate AIS message signals by a predetermined threshold value, and wherein the processing further comprises decolliding the one or more superimposed AIS message signals by, for each candidate AIS message signal in the one or more superimposed AIS message signals, computationally phase-shifting a first sampled signal segment of the one or more superimposed AIS message signals and combining with a second sampled signal segment of the one or more superimposed AIS message signals until the phase-shift in the second segment cancels, or reduces the relative strength of, an overlapping AIS message signal to reveal the candidate AIS message signal, wherein the second sampled signal segment is co-incident in time with the first sampled segment but received at a different antenna or different antenna polarization and decoding the one or more candidate AIS messages signals to obtain an AIS message segment.

In some embodiments, the method further comprises determining the accuracy of the one or more candidate AIS message signals by comparing a reported position of an AIS transmitter, the reported position identified in the one or more candidate AIS message signals, to a plurality of valid positions based on one or more of a Doppler offset, a polarization, a timestamp and the telemetry data associated with the one or more candidate AIS message signals.

[Removed]

In some embodiments, the method further comprises extracting a plurality of extracted parameters from the sampled packetized data, wherein the plurality of extracted parameters are selected from the group at least consisting of: a modulation index, signal amplitudes for each of the at least one antenna polarization of the at least one antenna, and phase offsets between the signals received by each of the at least one antenna polarization of the at least one antenna when a plurality of antenna polarizations or a plurality of antennas or both are employed. The plurality of antenna polarizations may comprise dual polarizations. The plurality of antenna polarizations may comprise three polarizations.

[Removed]

In some embodiments, the method further comprises storing the data stream in a database and processing data from a plurality of data streams to identify one or more candidate AIS message signals. The processor may be a High Performance Computing cluster. In some embodiments, the plurality of orbital satellites occupies at least three different orbital planes each of the three orbital planes having substantially different inclinations and/or substantially different altitudes.

In some embodiments the method further comprises encrypting the data stream prior to transmission to the at least one ground station and decrypting the data stream following reception at the at least one ground station.

In some embodiments, the method further comprises tracking and monitoring AIS transmitters by integrating data selected from the group of: AIS message signals, optical and radar tracking.

## BRIEF DESCRIPTION OF THE DRAWINGS

For a better understanding of the various embodiments described herein, and to show more clearly how they may be carried into effect, reference will now be made, by way of example only, to the accompanying Figures in which:

FIG. 1 is a general schematic diagram of an AIS processing system including a LEO satellite and a ground station;
FIGS. 2A and 2B are block diagrams of exemplary embodiments for the LEO satellite and ground station of FIG. 1;
FIG. 3 is a flowchart diagram for the exemplary embodiment for the LEO satellite and ground station of FIG. 1;
FIG. 4 is a flowchart diagram of an exemplary embodiment of a method for detecting and decoding AIS signals;
FIG. 5 is a diagram illustrating the data structure of an AIS message signal;
FIG. 6 is a flowchart diagram of another exemplary embodiment of a method for detecting and decoding AIS message signals;
FIG. 7 is a flowchart diagram of an exemplary embodiment of a method for processing digital input data to identify candidate message signals;
FIG. 8 is a flowchart diagram of an exemplary embodiment of a method for refining candidate message signals;
FIGS. 9A, 9B and 9C are graphical illustrations of correlation signals; and
FIGS. 10A, 10B and 10C are graphical illustrations of correlation signals.

## DETAILED DESCRIPTION

It will be appreciated that for simplicity and clarity of illustration, where considered appropriate, reference numerals may be repeated among the Figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practiced without these specific details. In other instances, well-known methods, procedures and components have not been described in detail since these are known to those skilled in the art. Furthermore, it should be noted that this description is not intended to limit the scope of the embodiments described herein, but rather as merely describing one or more exemplary implementations.

AIS signals can also be detected using low earth orbit (LEO) satellites, since the AIS signals are strong enough to be detected by a satellite. LEO satellites also provide coverage for areas that are out of range of coastal/ground stations. However, the large field of view (FOV) of a LEO satellite means that the LEO satellite may receive signals from large numbers of ships at once, particularly as the LEO satellite passes over high volume shipping areas, which typically results in a large number of AIS signals colliding or overlapping with one another. Furthermore, the large FOV of a LEO satellite means that ships in the FOV may be very far from each other and at great distances the SOTDMA communication method is not effective at avoiding signal collisions. Propagation delays also affect accurate time synchronization.

Therefore, one problem encountered in LEO satellite based AIS detection is that many of the AIS signals sent by ships will collide or overlap with one another. For example, it is estimated that there may be more than 2,000 ships in the FOV of a LEO satellite in high traffic areas. Each ship may typically send 10 AIS position reports per minute, so for 2,000 ships a LEO satellite may receive 20,000 AIS signals per minute. This is a very large number compared to the number of available time slots (i.e. 4,500 across both VHF channels) and as a result many AIS signals will collide with one another. Therefore, although the detection of AIS signals by a LEO satellite can provide a means for monitoring regions of low-density shipping traffic, the viability of this approach is largely dependent on being able to decode AIS signals in the presence of a large number of overlapping signals.

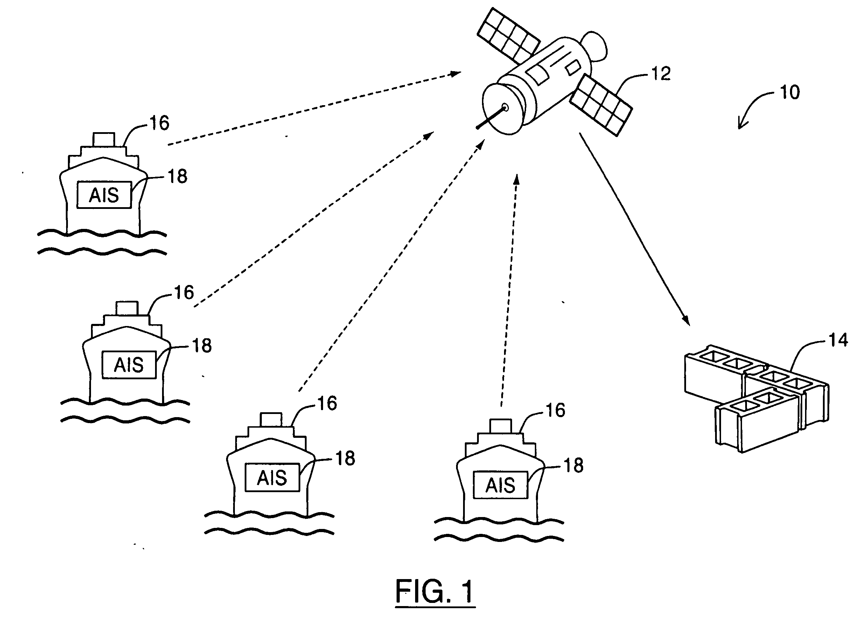

Reference is first made to FIG. 1, which shows a general diagram of an AIS processing system 10 including a LEO satellite 12 and a ground station 14 for receiving and decoding AIS signals. FIG. 1 illustrates numerous ships 16 that have an AIS 18 for transmitting AIS signals that are received by the LEO satellite 12. However, as described above, due to the large FOV of the LEO satellite 12, many of the received AIS signals overlap with one another. Accordingly, embodiments described herein relate to methods and systems for effectively detecting and decoding AIS signals when many of these signals may be overlapping with one another and may also be corrupted with noise or interference.

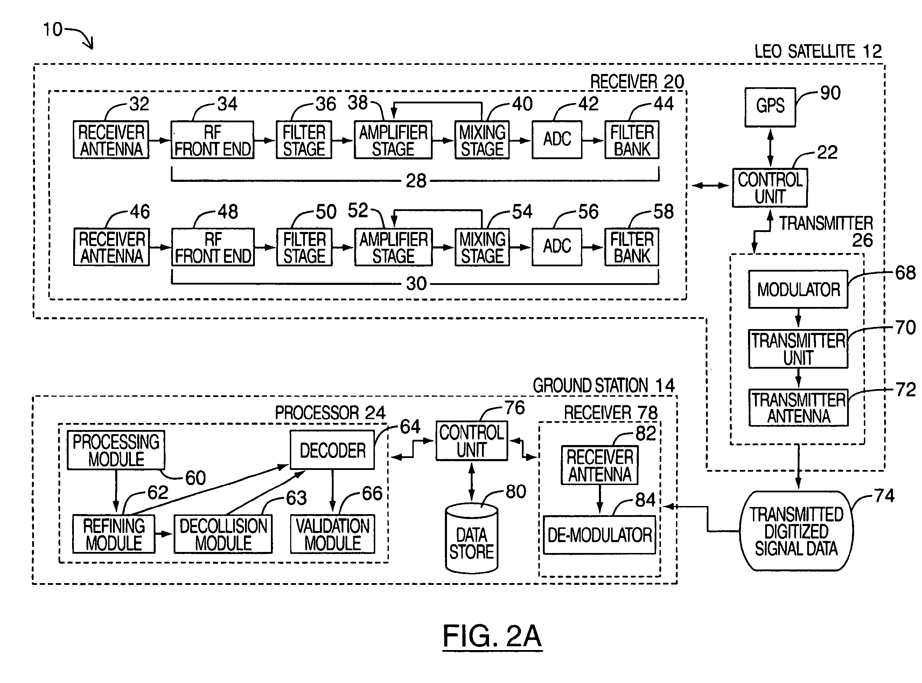

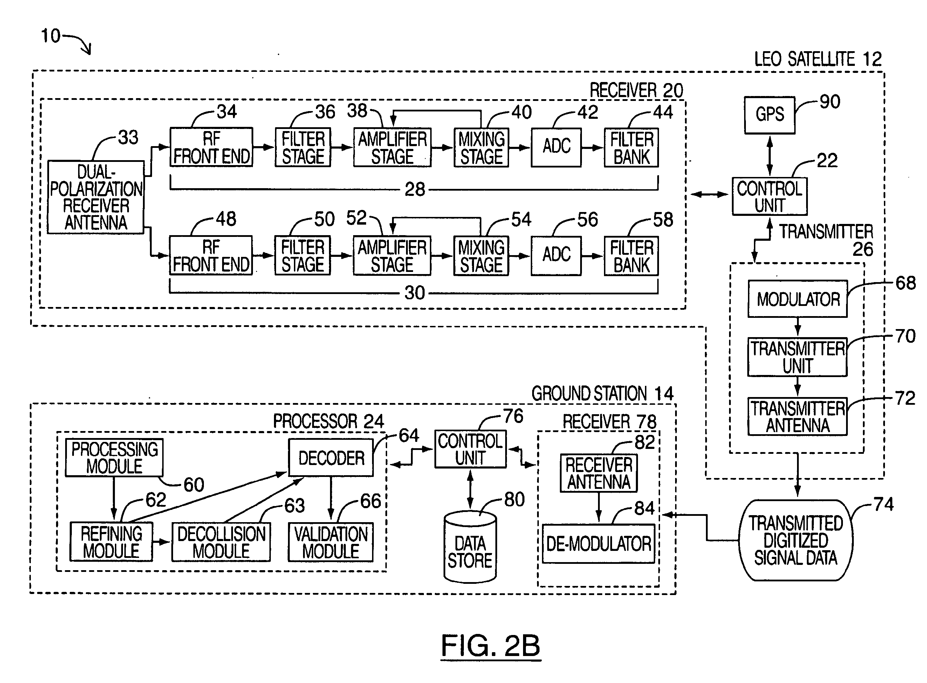

Typically, a given ship 16 will transmit AIS signals over two narrowband (i.e. 25 kHz) VHF channels. Examples of AIS VHF channels include AIS1 at 161.975 MHz, AIS2 at 162.025 MHz, and USAIS at 157.375 MHz. To transmit the signal, the transmitting unit of the AIS 18 employs a 9.6 kbps Gaussian minimum shift keying (GMSK) modulation, which is commonly known to imply that the AIS signal will be contained within a 14 kHz bandwidth. The LEO satellite 12 is equipped with at least one VHF antenna (see FIGS. 2A and 2B) and receives the AIS signal transmitted by the ship 16. The LEO satellite 12 travels at a high orbital velocity, such as 7,500 m/s for example, and consequently the AIS signal received by the LEO satellite 12 undergoes a Doppler shift of up to +/- 3.5 kHz.

The AIS signals received by the LEO satellite 12 will have a range of amplitudes, depending on the location of the ship 16 and its angular position as seen by the LEO satellite 12. Generally, the transmitting antenna used in the AIS 18 of a given ship 16 does not radiate directly upwards, and this creates a reception hole directly underneath the LEO satellite 12. However, for most of the FOV of the LEO satellite 12, the radiation patterns of the transmitting antenna of the AIS 18 tend to balance the reduced signal strength caused by increased range, and the range of received signal amplitudes is relatively modest, and is most likely less than 10 dB for most of the FOV of the LEO satellite 12. Unfortunately, the amplitude differential between overlapping AIS signals has to be quite large for conventional decoding to succeed (>10 dB). Nevertheless, in some circumstances, comparatively small amplitude differentials between overlapping signals may still provide a reasonable means to distinguish between them.

All received AIS signals are pre-processed at the LEO satellite 12 by filtering, sampling and packetizing to create digital input data, which is subsequently processed by a processor (see FIGS. 2A and 2B) so that detected AIS signals can be decoded to extract the message segment contained therein. The digital input data is downlinked to the ground station 14 where processing occurs to decollide the AIS signals and extract message segments, as will be explained with reference to FIGS. 2A and 2B.

Preferably, there is more than one LEO satellite 12 that receives and pre-processes the AIS signals. In addition, one or more ground stations 14 may be used to decollide and decode the pre-processed AIS signals. For simplicity, the embodiments described herein are with regards to a system with one LEO satellite 12 and one ground station 14, but the processing methodology can be extended to several LEO satellites and/or several ground stations. It is also conceivable that inter-satellite links (ISL) amongst a constellation of LEO satellites could be employed. However, this is a very costly and complex approach, and, in practice, distribution of data via a terrestrial network is more likely to be employed.

Referring now to FIGS. 2A and 2B, shown therein are block diagrams of exemplary embodiments for the LEO satellite 12 and the ground station 14 of the AIS processing system 10. In general, the LEO satellite 12 has a communication module comprising a receiver 20, a control unit 22, a GPS receiver 90 and a transmitter unit 26. The receiver 20 includes a first receiver channel 28, and a second receiver channel 30. In one embodiment, the receiver 20 has a first receiver antenna 32 and a second receiver antenna 46, as shown in FIG. 2A. In another embodiment, the receiver 20 has a dual-polarization receiver antenna 33, as shown in FIG. 2B. The first receiver channel 28 includes an RF front end 34, comprising a front end filter and a low noise amplifier, a filter stage 36, an amplifier stage 38, a mixing stage 40, an ADC 42 and a filter bank 44. The second receiver channel 30 includes similar components numbered 48 to 58. In some embodiments the second receiver channel 30 is not used, as will be described in more detail below. In still other embodiments, more than two antennas and more than two polarizations may be used, which will necessitate the use of additional receiver channels. Also, in some embodiments, the mixing stages 40 and 54 are not used if the ADC 42 and 56 operates at a sufficiently adequate sampling rate. The transmitter 26 generally includes a modulator 68, a transmitter unit 70 and a transmitter antenna 72.

The receiver 20 receives a plurality of AIS signals and pre-processes these signals to obtain digital input data. The digital input data is then modulated by the modulator 68 and transmitted by transmitter unit 70 via the transmitter antenna 72 as transmitted digitized signal data 74 to the ground station 14. In some embodiments, the control unit 22 may be configured to encrypt the digital input data prior to modulation and transmission.

The ground station 14 is equipped with a control unit 76, a receiver 78, a processor 24 and a data store 80, such as a database stored on a suitable storage medium. The receiver 78 includes a receive antenna 82 and a de-modulator 84 to demodulate the transmitted digitized signal data 74 that is received by the ground station 14. The control unit 76 controls the operation of the ground station 14, and can be used to retrieve the raw digitized signal data from the de-modulator 84, store the raw data on the data store 80, and later recall the stored raw data for processing. In embodiments where the digital input data is encrypted by control unit 22, control unit 76 is configured to decrypt the transmitted digitized signal data 74. Data store 80 may also be used to store AIS messages decoded and validated by processor 24. The processor 24 includes a processing module 60, a refining module 62, a decollision module 63, a decoder 64 and a validation module 66.

In some embodiments, various modules, such as refining module 62 and decollision module 63, may be combined into a single module. Processor 24 may be a parallel computer, programmed to use distributed, cluster, grid or other such High Performance computing techniques. Accordingly, the underlying physical processors comprising the computing cluster may perform computations associated with multiple different modules depending on the computations required at the moment. Preferably, there is a control processor, which coordinates and directs the computing tasks of other physical processors. For instance, a single control processor may perform computations where a global sorting of the candidate messages is required, such as in the refining module 62, prior to redistribution of the candidate messages among the physical processors for decoding and validation. Validated messages may then be gathered together and sorted by the single control processor prior to being stored on the data store 80.

The ground station 14 can also include a transmitter (not shown) for sending the raw data or decoded message segments to interested parties. For example, various security and intelligence organizations may be interested in reviewing all validated decoded message segments, and as such it is necessary to store them in the data store 80 for later recall. For instance, the decoded messages can be distributed in encrypted form via the Internet.

In the preferred embodiment, the receiver 20 includes two receiver channels 28 and 30. In one embodiment, the two receiver channels 28 and 30 correspond to receiver antennas 32 and 46. In another embodiment, the two receiver channels 28 and 30 correspond to the first and second polarizations of a dual-polarization antenna. However, in some embodiments only one receiver channel is used. In still other embodiments, there are multiple receiver channels corresponding to the number of antennas and antenna polarizations provided as input. For example, in the case where LEO satellite 12 is provided with two antennae, each with two polarizations, there would be four receiver channels (and each receiver channel is capable of processing all three AIS channels). For simplicity of explanation, the components of only one receiver path will be described.

The receiver antennas 32 and 46 are Very High Frequency (VHF) antennas that are preferably configured to receive AIS signals transmitted over the AIS1, AIS2 and USAIS channels. In another embodiment, the VHF antennas may be configured to receive AIS signals transmitted over the AIS1 and AIS2 channels and a dedicated Satellite AIS channel TBC (to be allocated). In one embodiment as shown in FIG. 2A, the receiver antennas 32 and 46 are polarized in a different, orthogonal manner to provide an additional processing gain for detecting and decoding AIS signals. For example, the receiver antenna 32 can have a right circular polarization, and the receiver antenna 46 can have a left circular polarization. Similarly, in another embodiment as shown in FIG. 2B, the dual-polarization receiver antenna 33 has two orthogonal polarizations to provide additional processing gain. Typically, the transmitter antenna used by the AIS 18 of a given ship 16 transmits AIS signals with a vertical linear polarization.

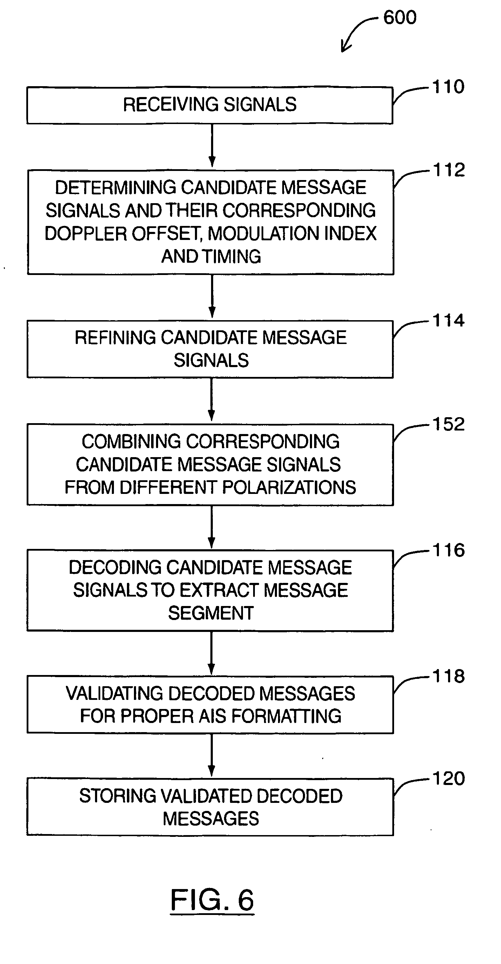

In embodiments with two or more receiver channels, the use of additional receiver antenna polarizations allows for corresponding signals to be received with various phase angles and thus enables the extraction of additional AIS signals, as is explained further below with relation to FIG. 6. Moreover, due to the vertical linear polarization of the transmitter antenna of the AIS 18 of a given ship 16, the AIS signals that are received by both right and left circular polarizations of receiver antennas and correspond with one another and generally have similar amplitudes.

In general, the receiver 20 is configured to receive an AIS signal in the Radio Frequency (RF) range and convert it to a baseband digital signal (i.e. digital input data). This pre-processing and conversion performed by the receiver 20 may be achieved in numerous ways and incorporates standard operations in signal processing. For instance, according to the exemplary embodiment shown in FIG. 2A, considering receiver channel 28, an AIS signal is first received by the receiver antenna 32 and processed by the RF front end 34. The RF front end 34 includes filtering and amplification components. The filtering components provide a first level of filtering to remove interfering signals, including intermodulation products caused by out of band carriers, as well as other noise. The filters that are used generally only have modest selectivity, but they preferably have very low loss since any loss at this stage directly decreases the overall system link budget. At this stage, the filtering components can include a VHF filter, which can be an LC type filter, and the amplification components include a low noise amplifier following the first level of filtering to boost the signal to a reasonable level.

The output of the RF front end 34 is then processed by the filter stage 36 that provides another level of more selective filtering. The filter stage 36 includes a wide band channel filter with a passband for transmitting all three AIS channels (i.e. AIS1 at 161.975 MHz, AIS2 at 162.025 MHz, and USAIS at 157.375 MHz). Alternatively, two combined filters may be used, one filter for the AIS1 and AIS2 channel and one filter for the USAIS channel, which may eliminate some interference between the two channels (i.e. AIS1/AIS2 and USAIS). The filter stage 36 generally employs a surface acoustic wave filter that can provide the sharp filtering that is needed.

The received signals are then processed by the amplifier stage 38 for adjustment of signal amplitude so that the full quantization range of the ADC 42 can be utilized during digitization. Accordingly, the amplification stage 38 includes variable gain amplifiers and feedback can be provided from the mixing stage 40 so that an automatic gain control (AGC) block (not shown) in the amplifier stage 38 or the mixing stage 40 can adjust the amount of gain, or alternatively attenuation, that is provided by the amplifier stage 38. Alternatively, in other embodiments, the control unit 22 can include an AGC component for controlling the amount of gain, or attenuation, provided by the amplifier stage 38.

In this sense, the receiver channel 28 employs distributed amplifying and filtering using several amplification and filtering components to reduce the performance burden on any one of the components and avoid any non-linearities that may otherwise be encountered. The way in which amplification is distributed throughout this RF processing chain is a matter that depends on detailed considerations of power consumption, noise figure, and intermodulation products.

The output of the amplifier stage 38 is then processed by the mixing stage 40, and digitized by the ADC 42. The mixing stage 40 downconverts the VHF signals to an Intermediate Frequency (IF) band such as 25 MHz, which means that a lower sampling rate can be employed to reduce the requirements of the ADC 42. The ADC 42 then samples the data. In some embodiments, a sufficiently fast ADC 42 may enable the conversion to IF to be omitted or, alternatively, mixing stage 40 may provide output data at baseband.

The digitized data is then processed by the filter bank 44. For the case in which the data is sampled at IF, the filter bank 44 includes means for downconversion to baseband, and narrowband filters to remove all out of band signals. For instance, a 20 kHz bandwidth linear phase digital filter can be used for each AIS channel to account for the expected range in possible Doppler shifts. A component for performing decimation (not shown) can also be included at this point to reduce the output sampling rate. In some embodiments, a Digital Signal Processor (DSP) can be used to implement the filter bank 44. In this case, the DSP can downconvert the digitized data to baseband, perform narrowband filtering, and perform decimation to produce digital input data. The AD6620 digital receive signal processor is one example of a DSP that can be used to produce digital input data that includes I and Q baseband data for each of the AIS channels.

In each of these embodiments, the receiver 20 pre-processes the received AIS signals to produce digital input data. This pre-processing includes fairly standard signal processing operations that can be performed with standard commercial hardware. The organization of the hardware and the processing can be modified in various ways as is commonly known by those skilled in the art. Accordingly, the embodiments discussed herein are simply intended to provide exemplary illustrations for performing this pre-processing. For instance, in another embodiment, the output of the RF front end 34 can be digitized with an ADC and then passed to a DSP that can provide downconversion to baseband, narrowband filtering and decimation, if desired.

Following pre-processing by receiver 20, the digital input data is supplied to control unit 22. Control unit 22 segments the digital input data into ordered frames or packets suitable for communication over a radiofrequency link to the ground station 14. A timestamp, relative to a current time reference (e.g., Coordinated Universal Time supplied by a GPS receiver) is inserted at suitable intervals. Preferably, control unit 22 frames the digital input data into packets defined by a Consultative Committee for Space Data Systems (CCSDS) protocol, such as CCSDS File Delivery Protocol (CFDP), or Space Communications Protocol Specifications (SCPS) protocols, such as SCPS-TP. In other embodiments, control unit 22 may frame the digital input data into other types of packets, such as a custom protocol, the Transmission Control Protocol (TCP) or User Datagram Protocol (UDP).

Control unit 22 preferably receives telemetry data from global positioning system (GPS) receiver 90. GPS receiver 90 is preferably a commercial NAVSTAR-GPS receiver suitable for use in orbital satellites, as is known in the art. In other embodiments, GPS receiver 90 may be a custom receiver or integrated into control unit 22. In still other embodiments, GPS receiver 90 may operate on a global navigation satellite system other than NAVSTAR-GPS, such as the European Galileo system. GPS receiver 90 calculates the orbital position of LEO satellite 12 and supplies corresponding telemetry data with a highly accurate current time reference to control unit 22. Control unit 22 transmits the telemetry data received from GPS receiver 90 to the ground station 14.

Preferably, the raw data stream is provided to the modulator 68, which digitally modulates the raw data for transmission to the ground station 14. The modulator 68 may employ various digital modulation techniques such as a phase-shift keying (PSK) digital modulation scheme (i.e., modulates the phase of a signal). Examples include quadrature PSK or a higher-order PSK such as 8-PSK. The digital modulated data stream is then received by the transmitter unit 70 which includes circuitry for generating analog signals that correspond to the digital modulated data stream, upconverts these analog signals to the frequency range required for transmission, and amplifies these signals so that they have the required signal strength that is needed for transmission to the ground station 14. These signals are then provided to the transmitter antenna 72 for transmission to the ground station 14. The transmitter antenna 72 at the LEO satellite 12 and the receiver antenna 78 at the ground station 14 can be configured for operation in, for example, the C band or the S band. The specifics of the downlink path are not described in detail, as it is largely dependent upon the sampling scheme used to digitize received signals and frequency allocations obtained from regulatory bodies. However, for exemplary purposes, the system 10 can be configured to operate in a bandwidth of approximately 2 MHz.

In addition, since the raw data stream may be considered to include classified information that must be kept secure, encryption can also be employed prior to modulation. In these cases, the transmission unit 26 includes an encryption module (not shown) for encrypting the raw data stream prior to modulation by modulator 68. In such cases, the ground station 14 includes a corresponding decryption module (not shown) to decrypt the received data, after demodulation, to recover the original raw data stream.

Furthermore, since the raw data stream may require a relatively large bandwidth to transmit, data compression may also be employed prior to modulation (and encryption, if used). In these cases, the transmission unit 26 includes a data compression module (not shown) for compressing the raw data stream prior to modulation by modulator 68. In this case, the ground station 14 includes a corresponding decompression module (not shown) to decompress the received data, after demodulation (and decryption, if necessary), to recover the original raw data stream. In some embodiments, data compression may instead be performed by control unit 22, during the packet forming process, in which case control unit 76 performs a corresponding decompression function when reading the packet data.

The LEO satellite 12 also includes a memory component (not shown) so that it has the ability to store the digital input data and associated GPS data until it is downlinked to the ground station 14. For example, the LEO satellite 12 may not always be in the FOV of the ground station 14 and so it may be necessary to store the data until the LEO satellite 12 enters into the FOV of the ground station 14 at which point the data may be downlinked.

Preferably, the processor 24 is a high performance computer or computers linked over a dedicated network connection. Although they are illustrated as being contained within a single ground station 14, various components may be located locally or remotely with respect to the ground station 14.

It should be noted that the control units 22 and 76 can be implemented using a processor. In some embodiments, the control unit 76 and the processor 24 can be implemented with the same processor. In addition, in some embodiments, the transmitter 26 and the receiver 78 can also employ processors. Furthermore, it should be noted that the various embodiments of the LEO 12 and the ground station 14 generally employ a combination of hardware and software. For instance, the components of the processor 24, the modulator 68 and the de-modulator 84 can be implemented using software. Furthermore, it should be understood that there can be embodiments in which these components are organized in a different fashion but perform the same functionality.

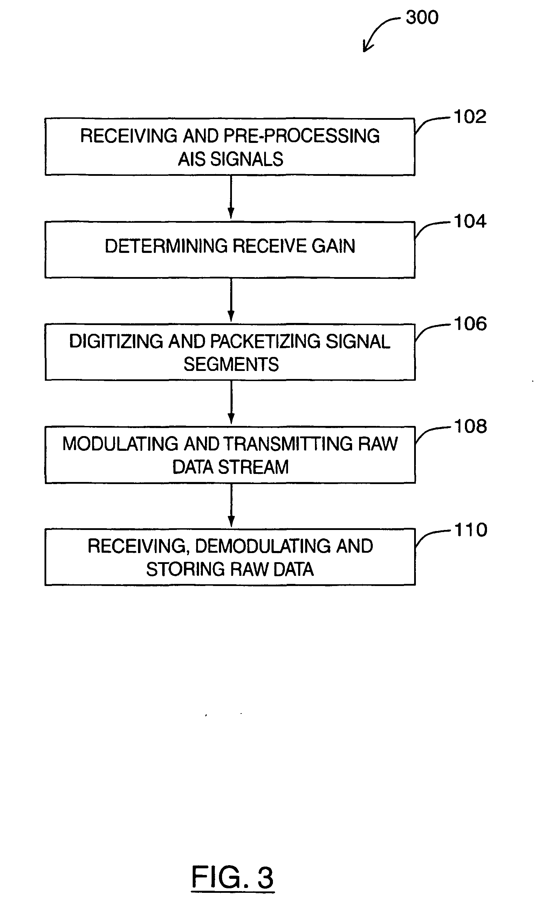

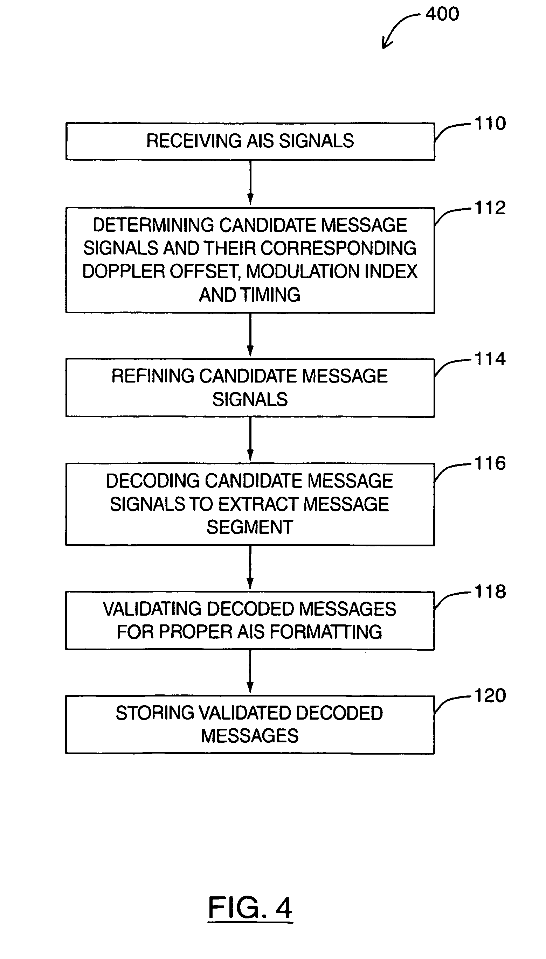

Referring now to FIG. 3, shown therein is a flowchart diagram of an exemplary embodiment of a method 300 for detecting and decoding AIS signals. At step 102, a plurality of AIS signals transmitted by a plurality of ships are received by the LEO satellite 12 and pre-processed to obtain digital input data. As explained above, generally the pre-processing converts the received AIS signals into a baseband digital form using filtering, amplification, mixing and sampling, for example. The filtering, amplification, mixing and sampling are configured to preserve maximum characteristic information in the sampled signal. At step 104, a corresponding receive gain for each signal segment is determined. At step 106, the sampled signal segments are framed into packets and formed into a raw data stream comprising sampled, packetized signal segments. At step 108, the raw data stream is modulated and transmitted to a ground station. At step 110, the transmitted raw data stream is received at the ground station, demodulated, reassembled into sampled signal segments and stored in a data store for further processing, as will be explained with reference to FIG. 4 below.

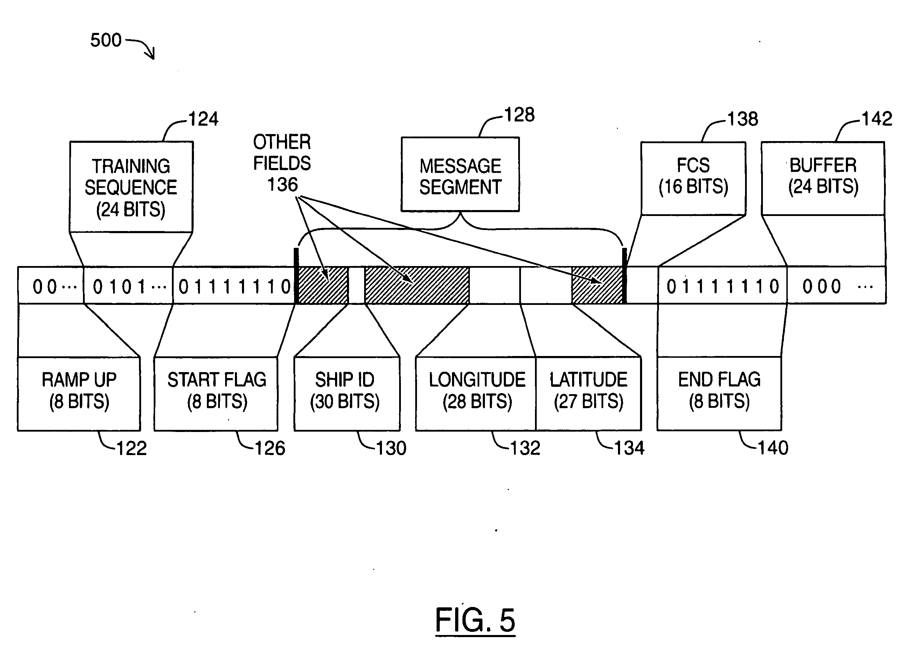

In the preferred embodiment, the sampled signal segments are provided to the processor 24 for detection and decoding of the AIS message segments. The processor 24 may provide the capability for segment processing to potentially reduce computation time. Once the processor 24 has received the sampled signal segments, it is provided to the processing module 60 as digital input data for processing. The processing module 60 identifies one or more candidate message signals and determines corresponding Doppler offset, modulation index and time estimates for each candidate message signal. The processing module 60 generally processes the digital input data by employing, correlation techniques. For example, the processing module 60 can process the digital input data with a plurality of predefined signals that correspond to Doppler offsets of a predetermined AIS code sequence (e.g. the training sequence 124 and start flag sequence 126 shown in FIG. 5 can be used) to compute a plurality of correlation signals.

After computing the plurality of correlation signals, the processing module 60 scans the correlation signals for correlation peaks (i.e. amplitude peaks) that exceed other peaks by a predetermined amount in order to identify the one or more candidate message signals. Generally, the correlation peak should exceed the amplitude of any subsequent peaks that lie within one signal length (i.e. 26.67 ms) of the data segment that is being analyzed. The correlation peak associated with a candidate message signal provides an estimate of its Doppler offset, modulation index, and timing, as will be explained in more detail below. The processing module 60 may be implemented using processing components, described in more detail below, to compute the correlation signals, using the predefined signals that correspond to Doppler offsets and various modulation indices of a predetermined AIS code sequence, in parallel to reduce the processing time.

After identifying one or more candidate message signals, the processing module 60 provides this group of candidate message signals to the refining module 62. The refining module 62 refines the candidate message signals for all Doppler shifts and modulation indices by sorting the candidate message signals in this group by their corresponding time estimates. The refining module 62 may then determine whether any of these candidate message signals is repeated at a different Doppler offset or modulation index estimate; if so, the refining module 62 removes all repeated candidate message signals from the group and retains only the strongest correlation peak. The refining module 62 may also identify and remove all candidate message signals that are overlapped or superimposed on their high time side by a candidate message signal whose amplitude exceeds a certain threshold value. The remaining candidate message signals comprise a refined group of candidate message signals that are then forwarded to the decoder 64. If multiple antennas or polarizations are present, then, for each candidate signal, phase shifted versions of the signal from each of the antennas or polarizations are combined to form a single composite signal. The decollision module 63 iterates through different combinations of phase shifts of the component signals forming the composite signal to determine if any combination suppresses overlapping signals by the specified threshold value, based on the amplitudes of the correlation peaks. If a combination suppresses overlapping signals by the specified threshold value, the selected composite signal is then forwarded to the decoder 64. The refining module 62 will typically alleviate the computational time required to decode all candidate message signals that are identified by the processing module 60, since the refined group of candidate message signals is generally (much) smaller in size than the group of candidate message signals identified by the processing module 60.

Due to the preservation of maximum signal characteristic information at step 102, further processing of the superimposed candidate message signals is possible. In the preferred embodiment, decollision module 63 is configured to decollide AIS message signals that are superimposed upon each other. Using groups of sampled signal segments that are co-incident in time, but were received at different antennas or different antenna polarizations, decollision module 63 exploits the relative phase difference in the sampled signal segments to decollide and extract superimposed or overlapping AIS message signals. The collided AIS message signals are decollided by computationally phase-shifting a first sampled signal segment and combining with a corresponding second sampled signal segment until the additional phase-shift in the second segment cancels or nulls out a first AIS message signal and reveals a second AIS message signal. This process is described in greater detail below with reference to method 600.

The decoder 64 decodes one or more candidate message signals to obtain (or extract) the AIS message segment contained therein. The decoder 64 receives the one or more candidate message signals from the refining module 62 or from the decollision module 63. In each case, there are no predetermined code sequences within the message segment, so correlation techniques may not be helpful to decode a candidate message signal. In some circumstances, the candidate message signals may contain specific identification numbers, such as a Maritime Mobile Service Identity, or specific locations. As such, in some cases, there may be some fixed known code sequences within the message segment, which can be used to employ correlation techniques. However, in cases where no such fixed known code sequences exist, the decoder 64 may employ various decoding procedures to extract message segments from the one or more candidate message signals. For example, the decoder 64 may perform Viterbi Decoding (or more generally dynamic programming), as is explained in further detail below. In any event, prior to decoding, more precise Doppler offset, modulation index and time estimates are obtained for the candidate message signals, as will be discussed below.

After the decoder 64 extracts message segments from the one or more candidate message signals, the message segments are provided to the validation module 66. The validation module 66 validates the decoded message segments for proper AIS signal message formatting by checking each decoded message segment for valid bit stuffing and then removing all bit stuffing. The bit stuffing is required by the AIS signal specification, where a 0 is required to be inserted into the message segment after any sequence of five successive 1's in the message and frame check sequence portion of the message segment. This is done to avoid the occurrence of spurious start and stop flags. The validation module 66 then verifies the frame check sequence field of the decoded message segment. If a decoded message segment passes these checks, it is temporarily stored in a list of decoded message segments that have been validated.

In addition to message formatting validation, AIS message integrity validation may also be performed by validation module 66 by using additional signal parameters such as arrival time, Doppler offset and satellite telemetry data. Where ground-based satellite tracking radar data is available, such radar data may also be used to supplement or substitute for satellite telemetry data. Because message signal decollision and extraction is performed on the ground and the raw signal data is stored at the ground station 14, multiple candidate message signals from a particular AIS transmitter are likely to be available. Accordingly, processor 24 may identify a series of candidate AIS message signals transmitted by a particular AIS transmitter of interest.

To validate the accuracy or integrity of the AIS transmitter sending the series of candidate message signals, processor 24 first compares the known position of the satellite at a given time to the reported position of an AIS transmitter in a first received candidate message signal and the Doppler offset thereof, to determine possible positions of the AIS transmitter based on the Doppler offset and satellite position. Subsequently, processor 24 compares a next known position of the satellite at a given time to the next reported position of the AIS transmitter in a next received candidate message signal and the Doppler offset thereof. This process may be repeated as necessary for a series of candidate message signals.

Processor 24 then determines the orbital track of the LEO satellite 12 that received the candidate message signals from the GPS positioning data transmitted from the satellite as part of the raw data stream. Based on the Doppler characteristics of the received message signals and their respective arrival times at LEO satellite 12, it is possible to determine if the reported positions correspond to an expected signal propagation time from the AIS transmitter to the LEO satellite 12 at each message signal arrival time. If the reported positions do not fall within a range of possible values given the LEO satellite 12 track, the candidate message signals are flagged as suspect. Suspect message signals may be discarded or, alternately, may be stored for further review by, e.g., law enforcement agencies.

Preferably, ground station 14 receives and stores raw data streams from a plurality of LEO satellites 12. In some embodiments, ground station 14 may be further equipped to receive additional AIS-related data from third parties over a communications link (not shown). For example, ground station 14 may receive AIS data from coastal stations over a network link. In other embodiments, ground station 14 may receive satellite tracking data from ground-based radar installations; the satellite tracking data may augment the telemetry data received from LEO satellites 12. Additional AIS signals received from other sources may be used by processor 24 to assist in extracting AIS message signals. As the FOV of most LEO satellites 12 is large, raw signal data contains many AIS message signal collisions. In order to extract AIS message signals 120 from the raw signal data, it is necessary to decollide the signals as outlined above.

Referring now to FIG. 5, shown therein is a diagram illustrating the data structure of an AIS message signal 120. The AIS message signal 120 includes a ramp-up field 122, a training sequence 124, a start flag field 126, and a message segment field 128 including a ship ID field 130, a longitude field 132, a latitude field 134 and several other fields 136. The AIS message signal 120 also includes a Frame Check Sequence (FCS) field 138, an end flag field 140 and a buffer field 142. The ramp-up field 122 usually coincides with the powering up of the transmitter of the AIS 18 of a given ship 16. The training sequence field 124 is included to allow the receiver of a conventional AIS 18 to perform carrier recovery. The training sequence field 124 and the start flag field 126 are predetermined AIS code sequences that are generally used by various embodiments described herein to process the digital input data to identify one or more candidate message signals. The message segment field 128 contains information relating to the ship 16 from which the AIS signal was sent, such as the ship ID 130 and the longitude 132 and the latitude 134 of the ship location.

The other fields 136 also include information related to the ship including the navigation status, rate of turn, true heading, etc. as well as other information such as a time stamp indicating when the information was obtained. The frame check sequence field 138 is used for error detection, and can be used to determine whether any AIS message signal data is lost or altered during transmission. The end flag field 140 is another predetermined AIS code sequence that may be employed during decoding as will be explained in further detail below. The buffer field 142 may change in length, so that even if bit stuffing is required the overall AIS message signal length remains constant.

In some embodiments, the raw data streams are processed by relying on the fact that the AIS message signals contain predetermined code sequences such as the training sequence and start flag fields 124 and 126 and the end flag field 140. Other fixed known code sequences may also exist within the AIS message signal that can also be used, but for simplicity, processor 24 may use at least the data in the training sequence field 124, i.e. in some case predefined signals are based on the training sequence field 124, while in other cases the predefined signals are based on both the training sequence and start flag fields 124 and 126 (i.e. a combination of the training sequence and the start flag sequence). In other cases, a portion of the message segment may also be used since the first byte of the message segment 128 is also reasonably predictable.

Generally, processor 24 employs correlation techniques by correlating the training sequence and start flag fields 124 and 126 with predetermined code sequences at a plurality of different Doppler offsets and modulation indices to produce a plurality of correlation signals (which can also be referred to as correlation functions). The generated correlation signals can then be used to identify one or more candidate message signals contained within the raw data stream. Generally, a peak in the amplitude of the correlation signal (i.e. a correlation peak) is used to identify a candidate message signal along with an estimate for its timing, using the position of the amplitude peak, and estimates of its Doppler offset and modulation index which will be the Doppler offset and modulation index associated with the predefined signal that was used in the correlation.

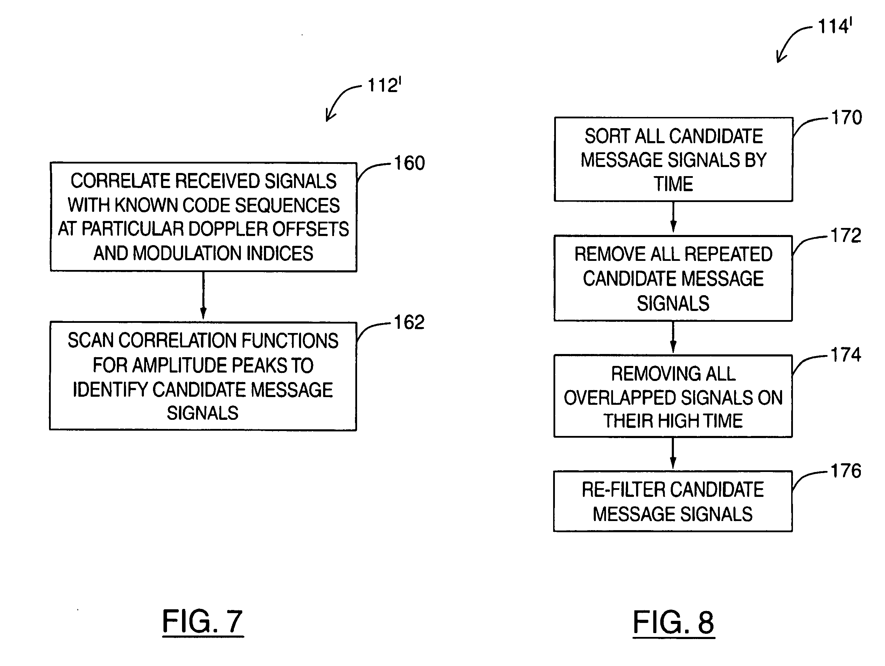

Referring now to FIG. 4, the method 400 begins at step 110 with processor 24 receiving demodulated and stored raw signal data. At step 112, processing module 60 identifies candidate message signals and their corresponding Doppler offset, modulation index and arrival time. At step 114, the candidate signal messages identified in step 112 are sorted and refined to produce a refined (and typically smaller) group of candidate message signals that can then be decoded in step 116. An exemplary implementation of the refining step is described in relation to FIG. 8. The underlying approach to the refining step is that generally a large number of candidate message signals will be identified at step 112, but due to overlapping signals, it may be difficult to decode the candidate message signals. Therefore, for computational efficiency, refining can be performed to remove repeated candidate message signals and to select only those signals that have a sufficient amplitude margin over any overlapped signals. Decoding is then performed on a better and smaller group of candidate message signals.

At step 116, the group of candidate message signals is decoded to extract the message segment contained therein. As explained above, in general, there are no fixed known code sequences within the message segment, so correlation techniques may not be helpful to decode the candidate AIS message signal. However, other techniques can be employed to decode candidate AIS message signals, such as dynamic programming techniques, or more specifically Viterbi decoding. Furthermore, prior to decoding, more precise Doppler offset, modulation index and time estimates are obtained for the candidate message signals, as previously mentioned.

Fine adjustment of the correlation signals is performed to obtain a more accurate determination of the timing, Doppler offset and modulation index for each of the candidate message signals. This fine adjustment procedure relies on the Schwarz inequality (see equation (5) further below), which shows that the maximum overlap integral is obtained when the two functions being correlated are identical. This fine adjustment procedure uses the same predetermined AIS code sequences used to generate the predefined signals at the correlation step.

The timing, Doppler offset and modulation index estimates of the predefined signals are then adjusted slightly to maximize the overlap integral with respect to the candidate message signal, with the initial Doppler offset, modulation index and timing estimates used as a starting point. The resulting values from the fine adjustment typically represent the best achievable estimates of timing, modulation index, phase and Doppler offset, i.e. an accurate Doppler offset, modulation index, time and phase for the identified candidate message signal. Maximizing the overlap integral involves maximizing a function of three variables given a good starting point. This can be performed by using a standard mathematical optimization routine, such as the Newton method, for example.

When decoding a candidate AIS message signal, Viterbi decoding employs the Viterbi algorithm to decode a bitstream, or in this case a message segment. However, during the decoding process, numerous sub-message segments are generated (i.e. partial paths as is explained further below) and it is then necessary to select the best message segment from this group of possible sub-message segments. This selection of the best message segment is done in the absence of any specific knowledge about the message segment contained within the candidate AIS message signals, since it is assumed that nothing is known about the contents of the message segment in order to use a broader decoding implementation. To select the best message segment, decoding may include determining which sub-message segment (of the group of sub-message segments) gives the closest possible match to the candidate AIS message signal. Many possible measures of closeness can be employed; one example is to choose the sub-message segment that minimizes the least squares error estimate.

In general, at any point the Viterbi decoding can be regarded as being in one of a certain number of possible states. The operation of the Viterbi algorithm can be understood with the aid of a trellis diagram (not shown), which illustrates the possible states and paths. The Viterbi decoder will begin at a starting point (or starting state) and as the decoder steps forward in time, in one bit steps, each state may make a transition to one or more subsequent states. This generates a number of possible paths through the trellis (i.e. the sub-message segments mentioned above). Depending on the number of states and the length of the message segment to be decoded, the number of possible paths may get very large.

In the context of decoding AIS message signals, a suitable starting point (or state) for the Viterbi decoder may be the predetermined code sequence at the start of the AIS message signal, namely the start flag field 126. From this starting point, the Viterbi decoder will make a transition to one or more of the subsequent states, generating a number of possible paths (i.e. the sub-message segments noted above) before terminating. An AIS message signal contains another predetermined code sequence that will help terminate a path, specifically the end flag field 140. Therefore, the Viterbi decoder continues to step forward in time to generate a number of paths (i.e. sub-message segments) until the contents of the end flag field 140 are detected in a specific path. When the contents of the end flag field 140 are detected, that specific path will terminate.

In order to determine the Viterbi decoder configuration in the context of AIS message signals, one can consider AIS message signal properties. As explained above, AIS signals are transmitted using GMSK modulation, where the message segment (i.e. sequence of bits) is transformed into waveforms (which form the AIS signal) for transmission. The AIS standard specifies a modulation index of 0.5, which corresponds to a total phase shift of $\pm \pi/2$ from each bit in the sequence. However, in actual operation, transmitters may have modulation indices that deviate considerably from this value. Accordingly, the true modulation index for each signal is preferably accurately determined, and a correction introduced, before the Viterbi decoder is applied. Looking first at simple baseband MSK (Minimum Shift Keying), the waveform of the signal corresponding to each bit period is in one of two forms (generally opposites) depending on whether the bit is a 0 or a 1. Each bit advances or retards the phase of the signal by $\pi/2$ depending on whether it is a 1 or a 0 respectively. The preceding bits only affect the current bit in so far as they fix the starting phase, which can take one of four possible values: 0, $\pi/2$, $\pi$, and $\pi/2$. A Viterbi decoder with four states is therefore appropriate for this type of decoding where, at each time step (i.e. bit interval), the states are defined by the four possible starting phases fixed by the preceding bits (e.g. 0, $\pi/2$, $\pi$, $\pi/2$).

In GMSK modulation, each bit produces a total phase shift of $\pm\pi/2$, but the effect of each bit is spread out over several steps in time. However, as an approximation, this effect can be neglected beyond the nearest neighbour intervals. In other words, to determine the waveform associated with a particular bit, such as a 0 for example, the bits that both precede and follow the particular bit are needed. For an approximation, the waveform in any bit interval will have one of eight possible forms, rather than the two required for simple MSK. In this approximation, a Viterbi decoder for GMSK modulation requires 16 rather than 4 states, where the state at a boundary between bits is defined by the bit preceding the boundary, the following bit, and the four possible phase states (i.e. 0, $\pi/2$, $\pi$, and $3\pi/2$) produced by all other preceding bits. However, if the phase state at any point is 0 or $\pi$, then the decoder can only transition to phase states of $\pi/2$ or $3\pi/2$ at the next step and vice versa. Furthermore, all paths in the trellis begin at one starting state, as determined by a predetermined code sequence, such as the data in the start flag field 126. Therefore, only 8 of the 16 possible states can be active at any subsequent step. Therefore, the Viterbi decoder for decoding AIS message signal segments has effectively 8 states.

As explained above, each path in the trellis corresponds to a particular sequence of bits, which may become a message segment when the path is terminated. However, considering that an AIS message segment, including the data in the frame check sequence field 138, is at least 184 bits long and that the Viterbi decoder effectively has 8 states, the total number of possible paths (i.e. sub-message segments) can be extremely large. Therefore, a workable Viterbi decoder should attempt to end most of these paths at intermediate points and not follow them all the way through the trellis, as explained above.

By reducing the number of paths, this is turn reduces the number of possible message segments decoded from the candidate AIS message signal. This can be done using what is sometimes referred to in dynamic programming as Bellman's principle of optimality. This requires that when two or more paths meet at the same state at a particular time point, only the partial path (i.e. sub-message segment) with the best performance measure is retained. The path with the best performance measure is the path that is closest to the actual signal, to that point, according to the chosen performance measure. The rationale for this procedure is that any path proceeding from that state and time point will have a better overall performance measure if it is associated with the survivor path (i.e. a previously retained path) rather than with any of the paths that were discarded. It also ensures that the number of active paths at any time point cannot exceed the number of states (since only one path is selected whenever two or more paths meet at the same state).

Many techniques may be employed to determine which partial path has the best performance measure. However, the technique used to select the best partial path should be able to select the best partial path in the absence of any specific knowledge about the message segment contained within the candidate AIS message signal. One exemplary technique that can be used to choose the best partial path minimizes the least squares error estimate. For example, the least squares error estimate may be expressed as:

$$E = \sum_{i=1}^{N} \int_{0}^{T} |a_i(t) - s(t + (i-1)T)|^2 dt \qquad (1)$$

where $s(t)$ represents the candidate AIS message signal, and $a_i(t)$ represents the theoretical waveform associated with a partial path at the $i^{th}$ bit interval, $T$ is the duration of a bit interval (1/9600 s), and $N$ is the number of bit intervals in the candidate message signal. The least squares technique then selects the $a_i(t)$ that minimize the above equation.

The least squares error estimate can also be expressed as:

$$E = \sum_{i=1}^{N} \int_{0}^{T} |a_i(t)|^2 - 2\operatorname{Re}(a_i(t)s^*(t + (i-1)T)) + |s(t + (i-1)T)|^2 dt \qquad (2)$$

where $s^*(t)$ is the complex conjugate of $s(t)$. Many performance measures may be employed. Normally the measure would be some positive number that is zero only when the two functions are identical. A typical choice would be an $L_p$ norm, which is of the form $F = \left( \sum_{i=1}^{N} \int_{0}^{T} |a_i(t) - s(t + (i-1)T)|^p dt \right)^{1/p}$. The current choice corresponds to $p=2$. This is by far the most common choice, as it is usually the simplest mathematically, and it has theoretical justification in many cases. The choices $p=1$ and $p=\infty$ also quite popular; $p=1$ can be used. Other values of $p$ may also be used in some cases.

Now factoring in that the theoretical waveform (i.e. the waveform representation of the partial path) is phase modulated only, then $|a_i(t)|$ is a constant, and so minimizing E is equivalent to maximizing P, where P is expressed as:

$$P = \sum_{i=1}^{N} \int_{0}^{T} 2\operatorname{Re}(a_i(t)s^*(t + (i-1)T)) dt \qquad (3)$$

In order to employ the technique described by equation (1) a specific value for $|a_i(t)|$ must be set at the start of decoding. This would normally be estimated from the amplitude of the predetermined code sequence at the start of the AIS message signal, namely the amplitude of the data in the start flag field 126. Such a specific amplitude estimate is not required to use equation (3). The $i^{th}$ interval is one bit period, which in this case is 1/9600 s.

As noted above, generally the data in the AIS message segment field 128 and the frame check sequence field 138 is at least 184 bits long (the message segment field 128 is 168 bits long and the frame check sequence field 138 adds a further 16 bits). Moreover, the AIS specification requires bit-stuffing, such that a 0 is inserted after any sequence of five successive 1's in the message and frame check sequence portions of the code. This is done to avoid the occurrence of spurious start and stop flags. Up to four of these bit-stuffing bits may occur, which increases the overall length of the message segment field 128 and the frame check sequence field 138 to a maximum of 188 bits.

Therefore, a message segment will be between 184-188 bits and so in this context the Viterbi decoder will terminate a path if a valid stop flag is encountered after between 184 and 188 bits have been extracted. In very rare cases more than one path with a valid stop flag is found for a given candidate AIS message signal. Even if this happens, all extracted message segments are passed on to step 118 for validation.

At step 118, the decoded candidate message signals are validated to ensure that they have proper AIS formatting. This may involve checking the decoded candidate message segments for a valid bit-stuffing format, as explained above. The bit-stuffing bits are then removed and the frame check sequence field 138 is checked. If a validated list of decoded message segments is desirable (i.e. for later storage and recall) then all decoded message segments that pass this validation step can be added to a list of validated decoded message segments and stored at step 120. Generally, if a message segment is partially correct it will not pass the validation step. However, alternative embodiments may use these partially extracted message segments for further message segment extraction. At step 120, all decoded messages segments can be stored for later recall. Alternatively, there can be embodiments in which only the list of validated decoded message segments are stored.

An optional extension to method 400 is to de-correlate all decoded message segments from the digital input data (i.e. subtracting off the best-fit representation of signals corresponding to the extracted message segments from the initial input data). This can be done after the validation step 118. The method 400 may then return back to step 112 and re-process the modified digital input data in an attempt to identify additional candidate AIS message signals, which can then be decoded to extract further message segments.

Another optional extension to this method 400 recognizes that AIS message signals sent from a single ship 16 will have substantial common message segments. Therefore, repeated messages from any given ship 16 can provide another mechanism for enhancing detection and decoding. For example, a previously detected message segment from a given ship 16 may be used to generate the predefined signal used in obtaining the correlation signals. Moreover, the previously decoded message segments may provide the option of using correlation techniques when decoding any candidate message signals. In such an embodiment, the decoder 64 is further configured to employ correlation techniques using the previously decoded message segments when decoding the candidate AIS message signals. If parts of the message sequence, such as the MMSI (i.e. ship id), are known, then these may also be used as part of the fixed code sequences used in the correlation procedure in step 112. A longer fixed code sequence discriminates better against other signals and gives an enhanced probability of detection. For example, when extracting the message sequence by a Viterbi decoder, the presence of known code sequences predefines segments of the paths and improves the overall probability of successful decoding.

Referring now to FIG. 6, shown therein is a flowchart diagram of another exemplary embodiment of a method 600 for detecting and decoding AIS message signals. The method 600 is similar to method 400. However, the method 600 includes step 152, which corresponds to embodiments of the LEO satellite in which two or more receiver channels are used. In these embodiments, at step 152, the candidate message signals that correspond to one another, but have different polarizations (i.e. AIS signals received by receiver antennas 32 and 46), are fine-tuned by combining the candidate message signals with a phase shift that maximizes the amplitude of the resulting combined candidate AIS message signal relative to that of any overlapping signal.

As explained above, a given AIS signal received by both receiver antennas 32 and 46 results in two corresponding candidate AIS message signals with two different polarizations, where one candidate AIS message signal is a phase-shifted version of the other candidate AIS message signal and both have comparable amplitudes. This phase shift might be anywhere in the range 0 to 360°. The two corresponding message signals are identified from corresponding (essentially equal time) correlation peaks identified at step 112. The phases of the two correlation functions at their corresponding peaks determine the phase difference between the corresponding messages. One or both of the two candidate AIS message signals may be overlapped by another message signal.

However, applying a phase shift to one or both of the two corresponding candidate AIS message signals and then combining these signals may cancel any unwanted overlapping signals, or at least reduce the strength of these unwanted signals. Moreover, this step attempts to maximize the amplitude of the combined candidate AIS message signal (relative to any overlapping signal), to produce a stronger signal for decoding. The combined candidate AIS message signal can then replace the two corresponding candidate AIS message signals and be decoded at step 116. In alternative embodiments, step 152 can be performed by detection and decoding methods that do not employ the refining step 114.

Alternatively, at step 152, the two corresponding candidate AIS message signals are simply combined by employing a variety of fixed phase-shifts to create a sub-set of combined candidate AIS message signals. If a candidate AIS message signal is overlapped by an unwanted signal with a different polarization, then it may be desirable to combine the candidate AIS message signal with the corresponding candidate AIS message signal (received by the other receiver antenna) by employing a phase shift that cancels the overlapped unwanted signal. In this case, to determine the optimal phase-shift, one may employ a variety of fixed phase-shifts, such as 8 different phase-shifts starting at 0° and advancing in steps of 45°, for example. Decoding is preferably attempted on each combination in succession until a successful decode is obtained or until all eight have been checked. The underlying strategy is to find a phase-shift that best cancels one or more of the unwanted overlapping signals to give a better chance of successful decoding. This strategy is computationally more expensive than that previously described because decoding must be attempted on multiple combinations of the signals in the two polarizations. However, in practice, it is somewhat more successful in extracting codes.

Referring now to FIG. 7, an implementation 112' of the processing step 112 is illustrated in more detail. At step 160, the digital input data, which represents the plurality of received AIS signals in one or both polarizations, depending on the number of receiver channels, is correlated with a number of pre-defined signals to produce a plurality of correlation signals. Each of these pre-defined signals corresponds to a particular known AIS message signal sequence at a particular Doppler offset and modulation index. The number of pre-defined signals is chosen so that there is always one pre-defined signal with a Doppler shift and modulation index that is sufficiently close to that of any possible received AIS signal so that the correlation peak can be detected with a minimal loss of amplitude.

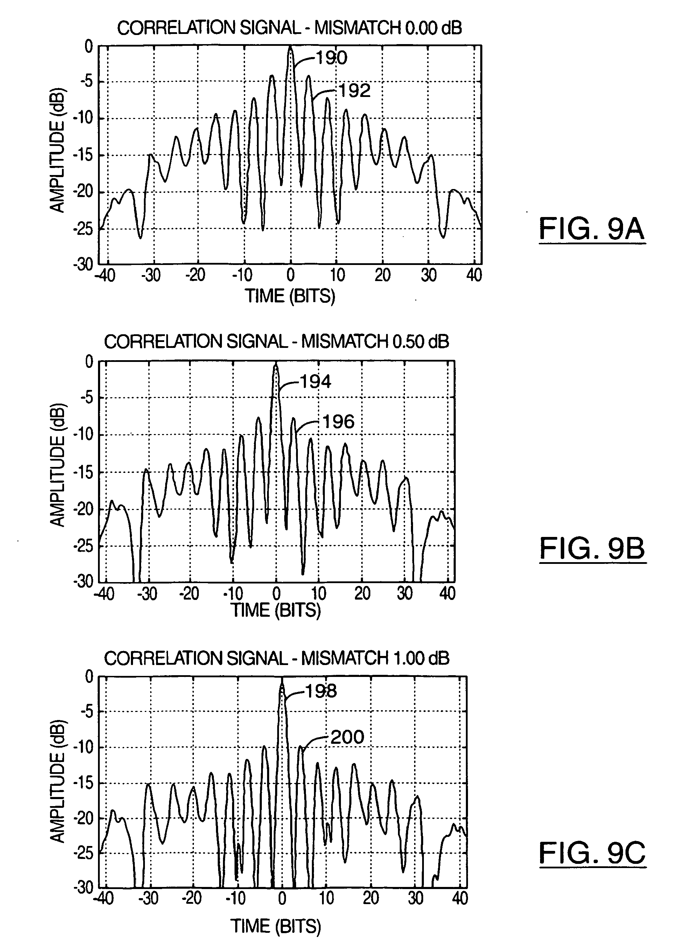

A Doppler offset between the pre-defined signal and the actual signal will reduce the amplitude of the correlation peak. A tolerance on allowable loss of amplitude must be selected, such as 0.5 dB for example. This then fixes the allowable Doppler offset to $\Delta f$ for example. If the predefined signals are then chosen so that their Doppler offsets are spaced apart by $2\Delta f$, then any actual signal will necessarily be within $\Delta f$ of one of the predefined signals. This correlation operation may be implemented by using a bank of matched filters (or more generally correlators). In some embodiments, the bank of matched filters can be selected to allow some mismatch so as to reduce the sidelobes of the correlation peak, so that they will not be confused as other candidate message signals at step 112, as will be explained further in relation to FIGS. 9A-9C. Correspondingly, because the modulation index of real AIS signals may lie anywhere in the range 0.4 to 0.6, a similar operation is performed to select a set of modulation indices for the predefined signals.

At step 162, each correlation signal is scanned for peaks whose amplitudes exceed those of any subsequent peaks that lie within the same signal length (i.e. 26.67 ms) by some specified amount (such peaks may be herein referred to as correlation peaks). The correlation peak in a correlation signal identifies candidate AIS message signals, as it provides an indicator that a signal similar to the predetermined AIS message code sequence used to generate the pre-defined signal is contained within the digital input data segment that is currently being processed.

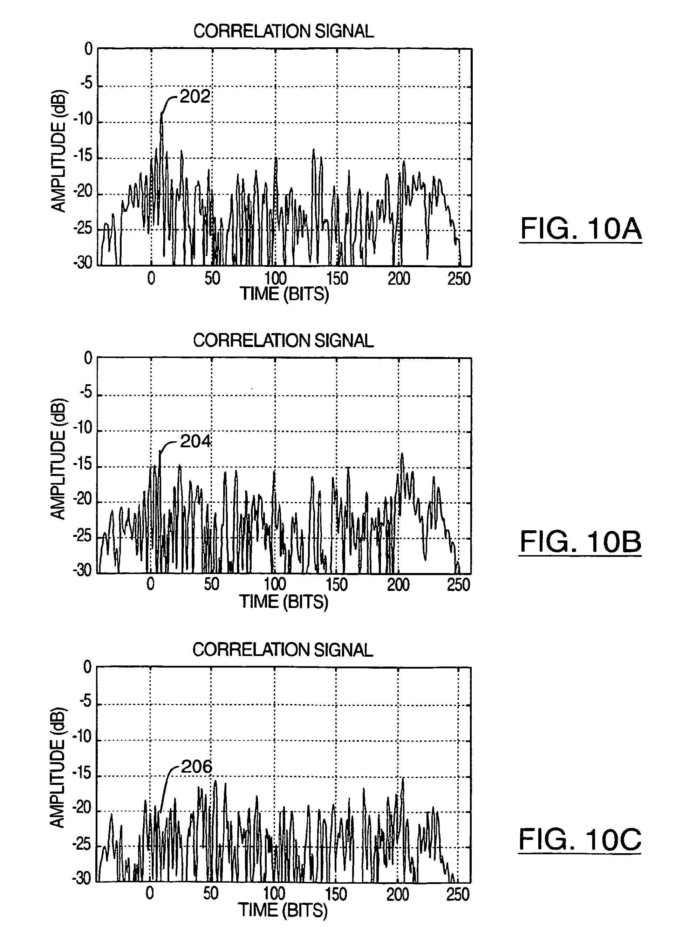

The act of identifying correlation peaks in the plurality of generated correlation signals whose amplitudes exceed a predetermined amount provides a coarse estimate of the timing, Doppler offset, and modulation index of an identified candidate message signal. This principle can be applied to many types of modulation. This is due to the discovery that if a peak occurs in a correlation signal then it is likely that the two signals (i.e. the identified candidate AIS message signal and the predefined signal) have similar Doppler offsets and modulation indices. Any peak in a correlation signal will be greatly reduced, or even removed completely, if the two correlated signals (i.e. the identified candidate message signal and the predefined signal) have different Doppler offsets. This will be explained in further detail later in relation to FIGS. 10A-10C. Accordingly, the estimated Doppler offset will be the Doppler offset used for the pre-defined signal in correlation signals that have an identifiable correlation peak.

To provide a more thorough explanation of how the generated correlation signal provides a means for identifying candidate AIS message signals and discriminating between overlapping signals with different Doppler offsets, reference will now be made to FIGS. 9A-9C and FIGS. 10A-10C, which show graphical representations of various correlation signals. Generally speaking, the correlation function provides a measure of how well one signal matches to another signal (or a time-shifted version of another signal). The correlation function used to generate the correlation signal for two complex signals may be written as:

$$c(t) = \int_{-\infty}^{\infty} r(\tau) s^{\bullet}(\tau - t) d\tau \qquad\qquad (4)$$

It is understood by those skilled in the art that the Schwarz inequality states that:

$$\left| \int_{-\infty}^{\infty} a(\tau) b^{\bullet}(\tau) d\tau \right|^2 \le \int_{-\infty}^{\infty} |a(\tau)|^2 d\tau \int_{-\infty}^{\infty} |b(\tau)|^2 d\tau \qquad\qquad (5)$$

Therefore:

$$\left| \int_{-\infty}^{\infty} r(\tau)s^*(\tau - t)d\tau \right|^2 \leq \int_{-\infty}^{\infty} |r(\tau)|^2 d\tau \int_{-\infty}^{\infty} |s(\tau - t)|^2 d\tau = \int_{-\infty}^{\infty} |r(\tau)|^2 d\tau \int_{-\infty}^{\infty} |s(\tau)|^2 d\tau \qquad (6)$$

Generally, autocorrelation is a measure of how well a signal matches itself. Using the above formulas, an autocorrelation function for a signal may be expressed as:

$$\left| \int_{-\infty}^{\infty} s(\tau)s^*(\tau - t)d\tau \right| \leq \int_{-\infty}^{\infty} |s(\tau)|^2 d\tau \qquad (7)$$

where equality holds when t=0. In the equations (4) to (7), $c(t)$ is the correlation function, $r(t)$ is a first complex signal, $s(t)$ is a second complex signal, $a(t)$ and $b(t)$ are arbitrary complex functions, and * denotes complex conjugate.

Correlating a signal with an identical replica implies that there is a minimum mismatch of 0 dB between the waveforms. However, such a procedure may have significant weaknesses. The correlation signal has its maximum amplitude when the signals exactly overlay each other, but the correlation signal may also have other significant peaks or sidelobes. When computing correlation signals using segments of the digital input data, such sidelobes can be confused with other candidate message signals, so it is important to ensure that these sidelobes are adequately suppressed.

Referring to FIG. 9A as an example, shown therein is a correlation signal resulting from the correlation of a signal with an exact replica of itself (i.e. the mismatch loss is 0 dB). The signal corresponds to an exemplary known AIS message signal code sequence that may be used to generate the pre-defined signals used in step 160. The known code sequence used in this example is 40 bits long and comprises a training sequence (24 bits), a start flag (8 bits), and the first byte (8 bits) from a message segment (see FIG. 5). It can be seen that the sidelobes 192 are approximately 4 dB below the correlation peak 190, which is large enough that the sidelobes 192 may be confused as other candidate message signals (as they appear to be peaks), when scanning the correlation signal for correlation peaks at step 162. To scan for peaks, a threshold value can be selected empirically. Basically, a very low threshold value will identify many spurious peaks, and a great deal of computer time may be expended uselessly trying to decode them. Conversely, a high threshold value may unnecessarily exclude valid peaks. A value of around 4 dB has been found to be a reasonable practical compromise. The great majority of the spurious peaks generated within an AIS signal are more than 4 dB below the main correlation peak (see FIG. 10a for example).

FIG. 9B shows the correlation signal that results from correlating a signal with another signal that is not an exact replica such that there is a minimum 0.5 dB mismatch loss between their waveforms. It can be seen that the sidelobes 196 are approximately 7 dB below the main peak 194, which is lower than the sidelobes 192 of the correlation signal with 0 dB mismatch in FIG. 9A. It is clear that the sidelobes 196 are presumably less likely to be confused as other candidate AIS message signals when scanning the correlation signal of FIG. 9B for correlation peaks.

FIG. 9C shows the correlation signal that results from correlating a signal with another signal that is not an exact replica such that there is a minimum 1 dB mismatch loss between their waveforms. It can be seen that the sidelobes 200 are approximately 10 dB below the correlation peak 198, which is lower than the sidelobes 192 of the correlation signal with 0 dB mismatch shown in FIG. 9A. It is clear that the sidelobes 200 are presumably even less likely to be confused as other candidate AIS message signals when scanning the correlation signal of FIG. 9C for correlation peaks.

However, mismatch loss is undesirable because it reduces the margin between the correlation peak and any spurious peaks that may occur, thereby making it more difficult to detect candidate AIS message signals at step 162. On the other hand, the minimum mismatch loss should be chosen that is consistent with an acceptable sidelobe level, to avoid confusing the sidelobes as candidate AIS message signals. As shown in FIG. 9B, a 0.5 dB mismatch loss gives a reduction in sidelobe level of approximately 7 dB with respect to the correlation peak. This is lower than the typical spurious peak or sidelobe levels that are encountered when computing the correlation of a received AIS signal with a predefined signal. Accordingly, a 0.5 dB mismatch is a reasonable practical choice, though the precise value is not too critical, and the processing at step 160 can be configured for a mismatch of 0.5 dB. Sidelobe level and mismatch loss can always be traded off against one another, but the precise choice of mismatch is dependent on the particular waveform. If the fixed code sequence within the AIS signals that is used for the correlator is changed, then a different choice of mismatch loss will in general be appropriate.

As explained above, performing the correlation as described herein is an effective way to discriminate between overlapping signals with different Doppler offsets or modulation indices. This is due to the fact that a correlation peak in a correlation signal will be greatly reduced, or even removed completely, if the two signals being correlated are at different Doppler offsets or modulation indices whereas if a correlation peak occurs in a correlation signal then it is likely that the two signals have similar Doppler offsets and modulation indices. For example, assume the digital input data segment being processed contains two overlapping AIS signals with different Doppler offsets. If a predefined signal has a similar Doppler offset to one of the AIS signals, then the correlation signal generated for this digital input data segment will generally contain a correlation peak that is much larger for the AIS signal having a similar Doppler offset compared to the other AIS signal. This is illustrated in FIGS. 10A-10C.

FIG. 10A shows the correlation signal that results from correlating a simulated AIS signal with a signal generated using a known 40-bit AIS code sequence, which includes a training sequence (24 bits), a start flag (8 bits), and the first byte of the message sequence (8 bits), with a 0.5 dB mismatch loss. Referring to FIG. 5, it can be seen that an AIS message signal starts with an 8-bit Ramp Up field 122 of eight zeros, which precedes the 40-bit AIS code sequence used to generate the correlation signal. Accordingly, as shown in FIG. 10A, the correlation peak 202 occurs at bit 8, when the 40-bit AIS code sequence begins. FIG. 10A illustrates that the correlation peak 202 has a significant amplitude margin over any sidelobes or other spurious peaks; this is partially due to the allowed mismatch of 0.5 dB.

FIG. 10B shows the correlation signal computed by correlating a simulated AIS signal with the same pre-defined signal used in FIG. 10A, except that the pre-defined signal has been given a Doppler offset of 100 Hz. Comparing the correlation peak 202 of FIG. 10A with the correlation peak 204 in FIG. 10B, it can be seen that the Doppler offset of 100 Hz has reduced the correlation peak 204 by approximately 4 dB.

FIG. 10C shows the correlation signal that results from correlating a simulated AIS signal with the same pre-defined signal that was used in FIG. 10A, except that the pre-defined signal has been given a Doppler offset of 200 Hz. Comparing the correlation peak 202 of FIG. 10A with the correlation peak 206 of FIG. 10C, it can be seen that the Doppler offset of 200 Hz has greatly reduced the correlation peak 206 such that the peak 206 is essentially obscured by noise and not detectable.

Accordingly, at step 162 when the correlation signals are scanned for peaks, if the located peaks have amplitudes that exceed those of any subsequent peaks that lie in the same signal length (in this case 26.67 ms for example) by a certain amount, such as about 4 dB as explained previously for this example, a candidate AIS message has been detected, and the Doppler offset and modulation index of the predefined signal provides an estimate of the Doppler offset and modulation index of the candidate AIS message and time of the located peak provides a time estimate for the candidate AIS message.

To further illustrate this point, the effects of Doppler offset on the correlation peak can be roughly explained as follows. Considering the zero mismatch case for simplicity, from equation (7) the magnitude of a correlation peak is given by:

$$\int_{-\infty}^{\infty} |s(\tau)|^2 d\tau = \int_{-T/2}^{T/2} |s(\tau)|^2 d\tau \tag{8}$$

where T is the duration of the signal (40 bits or 40/9600=4.167 ms in this example). To a first order, the Doppler shift will modify the correlation peak magnitude to:

$$\int_{-T/2}^{T/2} s(\tau) s^*(\tau) \exp(j\omega_D \tau) d\tau \tag{9}$$

where $\omega_D$ is the Doppler shift, giving a mismatch of:

$$M = 20\log_{10}\left[\frac{\left|\int_{-T/2}^{T/2} s(\tau) s^*(\tau) \exp(j\omega_D \tau) d\tau\right|}{\int_{-T/2}^{T/2} s(\tau) s^*(\tau) d\tau}\right] \text{dB} \tag{10}$$

As an AIS signal is transmitted using GMSK modulation, which is a form of phase modulation, the signal has constant amplitude and equation (10) simplifies to:

$$M = 20\log_{10}\left[\frac{1}{T}\left|\int_{-T/2}^{T/2}\exp(j\omega_D\tau)d\tau\right|\right] = 20\log_{10}\left[\frac{\sin(\omega_D T/2)}{\omega_D T/2}\right] = 20\log_{10}\left[\frac{\sin(\pi f_D T)}{\pi f_D T}\right]\text{ dB} \quad (11)$$

As a simplified example, assume the pre-defined signal is generated using a 40 bit sequence and a 100 Hz Doppler shift, with $f_D T$=100x40/9600 = 0.4167, then equation (11) gives a mismatch of 2.64 dB. The mismatch estimate in equation (11) is generally only strictly valid for a perfectly matched filter, but it is still approximately correct for the mismatched filters that are used in practice.

Equation (11) can be used to select the Doppler offsets for the pre-defined signals required in the processing step 160. In some embodiments, an additional mismatch of 0.5 dB will be acceptable, and equation (11) then implies that $|f_D T| < 0.186$. For a 40-bit correlation sequence, this implies that $|f_D)| < 44.6$ Hz. Therefore, if the pre-defined Doppler offsets lie on a uniformly spaced frequency grid with a spacing of less than 89.2 Hz, then the greatest possible mismatch with an actual signal will be less then 0.5 dB. If this is combined with the 0.5 dB mismatch typically allowed to reduce sidelobe levels, then the maximum overall mismatch is 1 dB, which is a reasonable figure.

In a further alternative embodiment, multiple predetermined AIS code sequences may be used to compute the predefined signals used in the processing step 110. In this case, a generalized correlation function may be defined using a weighted linear combination of the individual correlation functions ($w_i>0$):

$$c(t) = \sum_{i=1}^{N} w_i \int_{-\infty}^{\infty} r_i(\tau)s_i^{*}(\tau - t)d\tau \quad (12)$$

Since:

$$\left|\sum_{i=1}^{N} w_i \int_{-\infty}^{\infty} r_i(\tau)s_i^{*}(\tau - t)d\tau\right| \le \sum_{i=1}^{N} w_i \left|\int_{-\infty}^{\infty} r_i(\tau)s_i^{*}(\tau - t)d\tau\right| \le \sum_{i=1}^{N} w_i \left(\int_{-\infty}^{\infty}|r_i(\tau)|^2 d\tau\right)^{1/2}\left(\int_{-\infty}^{\infty}|s_i(\tau)|^2 d\tau\right)^{1/2} \quad (13)$$

where equality holds at t=0 if $r_i = s_i$, then a mismatch loss may be defined by:

$$L = 20\log_{10}\left(\frac{\left|\sum_{i=1}^{N} w_i \int_{-\infty}^{\infty} r_i(\tau)s_i^{*}(\tau)d\tau\right|}{\sum_{i=1}^{N} w_i \left(\int_{-\infty}^{\infty}|r_i(\tau)|^2 d\tau\right)^{1/2}\left(\int_{-\infty}^{\infty}|s_i(\tau)|^2 d\tau\right)^{1/2}}\right)\text{ dB} \quad (14)$$

where it is assumed that the minimum loss occurs at t=0.

As before, a zero mismatch is achieved if $r_i =s_i$ for all $i$, but as explained above the $r_i$ can be designed to allow a slight mismatch (around 0.5 dB for example) so as to reduce the sidelobe level in the generalized correlation function of equation (12). In general, the longer the pre-defined code sequence that is used, the better the overall performance will be. In such an embodiment, the processing module 60 can be configured to generate the predefined signals employed in the correlation using a plurality of predetermined AIS code sequences. In the above equations (12) to (14), N is the number of code sequences, $r_i(t)$ is the first complex signal for the $i$-th code sequence, $s_i(t)$ is the second complex signal for the $i$-th code sequence and $c(t)$ is the generalized correlation function. Furthermore, there is no precise rule for selecting the predetermined code sequences, and the choice may vary from case to case. Such predetermined code sequences must however comprise code segments that are always fixed, or are at least fixed for the great majority of cases, within the set of target signals.

Referring now to FIG. 8, shown therein is a flowchart diagram of an exemplary embodiment 114' of the refining step 114. At step 170, all detected candidate AIS message signals (for all Doppler shifts and modulation indices) are sorted in order of ascending time. At step 172, all repeated candidate AIS message signals where the same message has been detected at more than one Doppler offset or modulation index are removed. At step 174, messages are removed that are overlapped in both polarizations by stronger signals on their high time side, to obtain a refined group of candidate message signals. The term "high time side" refers to a given signal being overlapped by one or more signals whose correlation peaks occur at a later time than that of the given signal.

After obtaining a refined group of candidate message signals, optionally at step 176, narrowband filtering can be applied to the refined group of candidate message signals centered on the known Doppler offset frequency estimate. The bandwidth of this filter is typically 10 kHz. The narrowband filtering blocks as much spectral energy as possible from overlapping signals with different Doppler offsets, and improves the probability of successful decoding.

For simplicity, the embodiments described herein have primarily been described in relation to systems and methods with one LEO satellite and one ground station. However, as noted above, systems and methods employing multiple LEO satellites and/or one or more ground stations are possible, raising new AIS signal detection and decoding possibilities. With multiple LEO satellites, AIS signals from a given ship may be received by more than one LEO satellite. Correlation techniques using the data from the multiple LEO satellites can then be used. AIS signals received from ground stations can also be employed. For example, embodiments may be configured to de-correlate AIS signals transmitted by ships that are within the FOV of a ground station from the digital input data produced by an LEO satellite. This decorrelation removes the already detected AIS signals from the digital input data, and in effect, primarily only the AIS signals sent by ships outside of the FOV of the ground station remain in the digital input data for further processing, which limits AIS signal detection and decoding to those ships outside the FOV of the ground stations. Further, it should be noted that there can be embodiments in which the steps shown in at least one of FIGS. 7 and 8 are combined with the steps shown in FIGS. 4 or 6.

Preferably, multiple LEO satellites are deployed in a satellite constellation with a Walker pattern, with each satellite at substantially similar altitudes and inclinations. However, in an alternative embodiment, multiple LEO satellites may be deployed at substantially different altitudes and inclinations. For example, depending on the launch vehicles that are available, it may be more cost effective to deploy LEO satellites at different altitudes and inclinations corresponding to the most convenient launch vehicles. LEO satellites may be deployed at any suitable altitude, but preferably between 400 km and 850 km. Similarly, LEO satellites may be deployed at any inclination, but are preferably deployed in a constellation with a regular pattern to maximize coverage with fewer satellites. Further, LEO satellites are preferably deployed in orbits that provide optimal exposure to the sun, to enhance solar power collection and reduce battery power requirements. In one embodiment, multiple LEO satellites are deployed at three substantially different altitudes having three substantially different inclinations. LEO satellites may also be deployed in polar or equatorial orbits.

Numerous specific details are set forth herein in order to provide a thorough understanding of the exemplary embodiments described herein. However, it will be understood by those of ordinary skill in the art that these embodiments may be practiced without these specific details. In other instances, well-known methods, procedures and components have not been described in detail so as not to obscure the description of the embodiments. Furthermore, this description is not to be considered as limiting the scope of these embodiments in any way, but rather as merely describing the implementation of these various embodiments.

For instance, in an alternative embodiment, additional antennas and receiver channels can be used to provide additional directional information, which can aid in discriminating between AIS signals from different regions. If additional spatially separated antennas of any polarization are used, then all of the antennas receive signals of similar strength but with different phases. By combining these signals with appropriate phase and amplitude combinations, it is possible to discriminate in favor of some spatial directions and against others. This is similar to the concept of a phased array antenna, where directivity is achieved by having numerous radiating elements fed by an appropriate combination of phase shifters.

The required hardware is a generalization of the embodiment described herein for the two-antenna arrangement, in which each antenna has its own RF chain. In this case, the signal processing involves combining the antenna outputs in various phase combinations in a similar fashion as described for the two-antenna embodiment described herein. In cases in which sufficient spatial separation of the antennas is not achieved on a single LEO satellite, a cluster of LEO satellites can be used to utilize this feature of spatial differentiation of AIS signals received in space. In effect, this can be thought of as increasing the effective antenna size to enhance directivity. This hardware and processing structure can be generalized to any number of antennas that can be differentiated spatially or by using polarization or by using both of these characteristics. As long as independent information is available from each antenna then combining the antenna outputs in different phase combinations provides a mechanism for discriminating between AIS signals coming from different directions.

## Claims

1. A system (10) for detecting and decoding Automatic Identification System AIS signals, the system comprising:

   (a) a plurality of orbital satellites, each orbital satellite (12) having at least one antenna (32, 33, 46), the at least one antenna having a plurality of antenna polarizations for receiving a plurality of phase-shifted radio frequency signals, the radio frequency signals comprising one or more AIS message signals (500);
(b) each orbital satellite (12) also having a communication module configured to:

(i) accept the plurality of phase-shifted radio frequency signals;
(ii) convert the plurality of phase-shifted radio frequency signals into sampled packetized data;
(iii) insert the sampled packetized data and a plurality of signal parameters into a data stream; and
(iv) transmit the data stream and a telemetry data stream for the orbital satellite to at least one ground station (14); and

(c) a processor (24) located at the at least one ground station (14) configured to receive the data stream; correlate the data stream with a plurality of predefined signals to compute a plurality of correlation signals; and scan the plurality of correlation signals for correlation peaks that exceed other peaks by a predetermined amount to identify one or more candidate AIS message signals, **characterised in that** the processor comprises:

(i) a refining module (62) configured to identify and remove one or more superimposed AIS message signals, the one or more superimposed AIS message signals being one or more candidate AIS message signals superimposed by a candidate message signal whose correlation peak exceeds that of the one or more candidate AIS message signals by a predetermined threshold value;
(ii) a decollision module (63) configured to decollide the one or more superimposed AIS message signals by, for each candidate AIS message signal in the one or more superimposed AIS message signals, computationally phase-shifting a first sampled signal segment of the one or more superimposed AIS message signals and combining with a second sampled signal segment of the one or more superimposed AIS message signals until the phase-shift in the second segment cancels, or reduces the relative strength of, an overlapping AIS message signal to reveal the candidate AIS message signal, wherein the second sampled signal segment is co-incident in time with the first sampled segment but received at a different antenna or different antenna polarization; and
(iii) a decoder (64) configured to decode the one or more candidate AIS message signals to obtain an AIS message segment.

2. The system of claim 1, wherein the processor (24) also determines the accuracy of the one or more candidate AIS message signals by comparing a reported position of an AIS transmitter (18), the reported position being identified in the one or more candidate AIS message signals, to a plurality of valid positions based on one or more of a Doppler offset, a polarization, a timestamp and the telemetry data associated with the one or more candidate AIS message signals.

3. The system of claim 1, wherein at least one of the signal parameters inserted into the data stream is a receive gain for each of the antenna polarizations.

4. The system of claim 1, wherein the plurality of antenna polarizations comprises dual polarizations.

5. The system of claim 1, wherein the plurality of antenna polarizations comprises three polarizations.

6. The system of claim 1, wherein the processor (24) is a High Performance Computing cluster.

7. The system of claim 1, wherein the plurality of orbital satellites occupies at least three different orbital planes, each of the three orbital planes having substantially different inclinations and/or substantially different altitudes.

8. The system of claim 1, wherein the data stream is encrypted for transmission to at least one ground station (14).

9. A method for detecting and decoding Automatic Identification System AIS signals, the method comprising:

(a) providing a plurality of orbital satellites, each orbital satellite (12) having at least one antenna (32, 33, 46), the at least one antenna having a plurality of antenna polarizations for receiving a plurality of phase-shifted radio frequency signals, the radio frequency signals comprising one or more AIS message signals (500);
(b) filtering, sampling and packetizing the plurality of phase-shifted radio frequency signals into sampled packetized data;
(c) inserting the sampled packetized data and a plurality of signal parameters into a data stream;
(d) transmitting the data stream and a telemetry data stream for the orbital satellite (12) to at least one ground station (14);

(e) receiving the data stream at the at least one ground station;

(f) correlating the data stream with a plurality of predefined signals to compute a plurality of correlation signals;

(g) scanning the plurality of correlation signals for correlation peaks that exceed other peaks by a predetermined amount to identify one or more candidate AIS message signals; and

(h) processing the data stream at the at least one ground station (14) to identify one or more candidate AIS message signals

**characterised in that** the processing comprises:

(i) identifying and removing one or more superimposed AIS message signals, the one or more superimposed AIS message signals being one or more candidate AIS message signals superimposed by a candidate message signal whose correlation peak exceeds that of the one or more candidate AIS message signals by a predetermined threshold value;

(ii) decolliding the one or more superimposed AIS message signals by, for each candidate AIS message signal in the one or more superimposed AIS message signals, computationally phase-shifting a first sampled signal segment of the one or more superimposed AIS message signals and combining with a second sampled signal segment of the one or more superimposed AIS message signals until the phase-shift in the second segment cancels, or reduces the relative strength of, an overlapping AIS message signal to reveal the candidate AIS message signal, wherein the second sampled signal segment is co-incident in time with the first sampled segment but received at a different antenna or different antenna polarization; and

(iii) decoding the one or more candidate AIS messages signals to obtain an AIS message segment.

10. The method of claim 9, further comprising determining the accuracy of the one or more candidate AIS message signals by comparing a reported position of an AIS transmitter (18), the reported position being identified in the one or more candidate AIS message signals, to a plurality of valid positions based on one or more of a Doppler offset, a polarization, a timestamp and the telemetry data associated with the one or more candidate AIS message signals.

11. The method of claim 9, wherein at least one of the signal parameters is a receive gain for each of the antenna polarizations.

12. The method of claim 9, wherein the plurality of antenna polarizations comprises dual polarizations.

13. The method of claim 9, wherein the plurality of antenna polarizations comprises three polarizations.

14. The method of claim 9, further comprising storing the data stream in a database (80) and processing data from a plurality of data streams to identify one or more candidate AIS message signals.

15. The method of claim 9, wherein the processor is a High Performance Computing cluster.

16. The method of claim 9, wherein the plurality of orbital satellites occupies at least three different orbital planes, with each of the three orbital planes having substantially different inclinations and/or substantially different altitudes.

17. The method of claim 9, further comprising encrypting the data stream prior to transmission to the at least one ground station (14) and decrypting the data stream following reception at the at least one ground station (14).

18. The method of claim 9, further comprising tracking and monitoring AIS transmitters (18) by integrating data selected from the group of: AIS message signals, optical and radar tracking.

**Patentansprüche**

1. System (10) zum Erkennen und Decodieren von AIS-(automatisches Identifikationssystem)-Signalen, wobei das System Folgendes umfasst:

(a) mehrere Orbitalsatelliten, wobei jeder Orbitalsatellit (12) wenigstens eine Antenne (32, 33, 46) hat, wobei die wenigstens eine Antenne mehrere Antennenpolarisationen zum Empfangen mehrerer phasenverschobener Funkfrequenzsignale hat, wobei die Funkfrequenzsignale ein oder mehrere AIS-Nachrichtensignale (500) enthalten;

(b) wobei jeder Orbitalsatellit (12) auch ein Kommunikationsmodul hat, das konfiguriert ist zum:

(i) Akzeptieren der mehreren phasenverschobenen Funkfrequenzsignale;
(ii) Umwandeln der mehreren phasenverschobenen Funkfrequenzsignale in abgetastete paketierte Daten;
(iii) Einfügen der abgetasteten paketierten Daten und mehrerer Signalparameter in einen Datenstrom; und
(iv) Senden des Datenstroms und eines Telemetriedatenstroms für den Orbitalsatelliten zu wenigstens einer Bodenstation (14); und

(c) einen Prozessor (24), der sich an der wenigstens einen Bodenstation (14) befindet und zum Empfangen des Datenstroms konfiguriert ist; Korrelieren des Datenstroms mit mehreren vordefinierten Signalen zum Berechnen mehrerer Korrelationssignale; und Scannen der mehreren Korrelationssignale auf Korrelationsspitzen, die andere Spitzen um einen vorbestimmten Betrag übersteigen, um ein oder mehrere Kandidaten-AIS-Nachrichtensignale zu identifizieren, **dadurch gekennzeichnet, dass** der Prozessor Folgendes umfasst:

(i) ein Verfeinerungsmodul (62) zum Identifizieren und Entfernen von einem oder mehreren überlagerten AIS-Nachrichtensignalen, wobei die ein oder mehreren überlagerten AIS-Nachrichtensignale ein oder mehrere Kandidaten-AIS-Nachrichtensignale sind, die von einem Kandidatennachrichtensignal überlagert sind, dessen Korrelationsspitze die ein oder mehreren Kandidaten-AIS-Nachrichtensignale um einen vorbestimmten Schwellenwert übersteigt;
(ii) ein Dekollisionsmodul (63) zum Dekollidieren der ein oder mehreren überlagerten AIS-Nachrichtensignale durch, für jedes Kandidaten-AIS-Nachrichtensignal in den ein oder mehreren überlagerten AIS-Nachrichtensignalen, rechnerisches Phasenverschieben eines ersten abgetasteten Signalsegments der ein oder mehreren überlagerten AIS-Nachrichtensignale und Kombinieren mit einem zweiten abgetasteten Signalsegment der ein oder mehreren überlagerten AIS-Nachrichtensignale, bis die Phasenverschiebung im zweiten Segment gelöscht oder die relative Stärke eines überlappenden AIS-Nachrichtensignals reduziert ist, um das Kandidaten-AIS-Nachrichtensignal aufzudecken, wobei das zweite abgetastete Signalsegment zeitlich mit dem ersten abgetasteten Signalsegment zusammenfällt, aber mit einer anderen Antenne oder einer anderen Antennenpolarisation empfangen wird; und
(iii) einen Decodier (64) zum Decodieren der ein oder mehreren Kandidaten-AIS-Nachrichtensignale, um ein AIS-Nachrichtensegment zu erhalten.

2. System nach Anspruch 1, wobei der Prozessor (24) auch die Genauigkeit der ein oder mehreren Kandidaten-AIS-Nachrichtensignale durch Vergleichen einer gemeldeten Position eines AIS-Senders (18) ermittelt, wobei die gemeldete Position in den ein oder mehreren Kandidaten-AIS-Nachrichtensignalen zu mehreren gültigen Positionen auf der Basis von einem oder mehreren aus Doppler-Versatz, Polarisation, Zeitstempel und Telemetriedaten in Verbindung mit den ein oder mehreren Kandidaten-AIS-Nachrichtensignalen identifiziert wird.

3. System nach Anspruch 1, wobei wenigstens einer der in den Datenstrom eingefügten Signalparameter eine Empfangsverstärkung für jede der Antennenpolarisationen ist.

4. System nach Anspruch 1, wobei die mehreren Antennenpolarisationen zwei Polarisationen umfassen.

5. System nach Anspruch 1, wobei die mehreren Antennenpolarisationen drei Polarisationen umfassen.

6. System nach Anspruch 1, wobei der Prozessor (24) ein High Performance Computing Cluster ist.

7. System nach Anspruch 1, wobei die mehreren Orbitalsatelliten wenigstens drei verschiedene Orbitalebenen einnehmen, wobei jede der drei Orbitalebenen im Wesentlichen andere Neigungen und/oder im Wesentlichen andere Höhen haben.

8. System nach Anspruch 1, wobei der Datenstrom zum Senden zu wenigstens einer Bodenstation (14) verschlüsselt wird.

9. Verfahren zum Erkennen und Decodieren von AIS-(automatisches Identifikationssystem)-Signalen, wobei das Verfahren Folgendes beinhaltet:

(a) Bereitstellen mehrerer Orbitalsatelliten, wobei jeder Orbitalsatellit (12) wenigstens eine Antenne (32, 33, 46) aufweist, wobei die wenigstens eine Antenne mehrere Antennenpolarisationen zum Empfangen mehrerer phasenverschobener Funkfrequenzsignale hat, wobei die Funkfrequenzsignale ein oder mehrere AIS-Nachrichtensignale (500) umfassen;

(b) Filtern, Abtasten und Paketieren der mehreren phasenverschobenen Funkfrequenzsignale zu abgetasteten paketierten Daten;

(c) Einfügen der abgetasteten paketierten Daten und mehrerer Signalparameter in einen Datenstrom;

(d) Senden des Datenstroms und eines Telemetriedatenstroms für den Orbitalsatelliten (12) zu wenigstens einer Bodenstation (14);

(e) Empfangen des Datenstroms an der wenigstens einen Bodenstation;

(f) Korrelieren des Datenstroms mit mehreren vordefinierten Signalen zum Berechnen mehrerer Korrelationssignale;

(g) Scannen der mehreren Korrelationssignale auf Korrelationsspitzen, die andere Spitzen um einen vorbestimmten Betrag übersteigen, um ein oder mehrere Kandidaten-AIS-Nachrichtensignale zu identifizieren; und

(h) Verarbeiten des Datenstroms an der wenigstens einen Bodenstation (14), um ein oder mehrere Kandidaten-AIS-Nachrichtensignale zu identifizieren,

**dadurch gekennzeichnet, dass** die Verarbeitung Folgendes beinhaltet:

(i) Identifizieren und Entfernen von einem oder mehreren überlagerten AIS-Nachrichtensignalen, wobei die ein oder mehreren überlagerten AIS-Nachrichtensignale ein oder mehrere Kandidaten-AIS-Nachrichtensignale sind, die von einem Kandidatennachrichtensignal überlagert werden, dessen Korrelationsspitze die der ein oder mehreren Kandidaten-AIS-Nachrichtensignale um einen vorbestimmten Schwellenwert übersteigt;

(ii) Dekollidieren der ein oder mehreren überlagerten AIS-Nachrichtensignale durch, für jedes Kandidaten-AIS-Nachrichtensignal in den ein oder mehreren überlagerten AIS-Nachrichtensignalen, rechnerisches Phasenverschieben eines ersten abgetasteten Signalsegments der ein oder mehreren überlagerten AIS-Nachrichtensignale und Kombinieren mit einem zweiten abgetasteten Signalsegment der ein oder mehreren überlagerten AIS-Nachrichtensignale, bis die Phasenverschiebung im zweiten Segment gelöscht oder die relative Stärke eines überlappenden AIS-Nachrichtensignals reduziert ist, um das Kandidaten-AIS-Nachrichtensignal aufzudecken, wobei das zweite abgetastete Signalsegment zeitlich mit dem ersten abgetasteten Segment zusammenfällt, aber mit einer anderen Antenne oder einer anderen Antennenpolarisation empfangen wird; und

(iii) Decodieren der ein oder mehreren Kandidaten-AIS-Nachrichtensignale, um ein AIS-Nachrichtensegment zu erhalten.

10. Verfahren nach Anspruch 9, das ferner das Ermitteln der Genauigkeit der ein oder mehreren Kandidaten-AIS-Nachrichtensignale durch Vergleichen einer gemeldeten Position eines AIS-Senders (18) beinhaltet, wobei die gemeldete Position in den ein oder mehreren Kandidaten-AIS-Nachrichtensignalen zu mehreren gültigen Positionen auf der Basis von einem oder mehreren aus Doppler-Versatz, Polarisation, Zeitstempel und den Telemetriedaten in Verbindung mit den ein oder mehreren Kandidaten-AIS-Nachrichtensignalen identifiziert wird.

11. Verfahren nach Anspruch 9, wobei wenigstens einer der Signalparameter eine Empfangsverstärkung für jede der Antennenpolarisationen ist.

12. Verfahren nach Anspruch 9, wobei die mehreren Antennenpolarisationen zwei Polarisationen beinhalten.

13. Verfahren nach Anspruch 9, wobei die mehreren Antennenpolarisationen drei Polarisationen beinhalten.

14. Verfahren nach Anspruch 9, das ferner das Speichern des Datenstroms in einer Datenbank (80) und das Verarbeiten von Daten von mehreren Datenströmen zum Identifizieren von einem oder mehreren Kandidaten-AIS-Nachrichtensignalen beinhaltet.

15. Verfahren nach Anspruch 9, wobei der Prozessor ein High Performance Computing Cluster ist.

16. Verfahren nach Anspruch 9, wobei die mehreren Orbitalsatelliten wenigstens drei verschiedene Orbitalebenen einnehmen, wobei jede der drei Orbitalebenen im Wesentlichen unterschiedliche Neigungen und/oder im Wesentlichen unterschiedliche Höhen haben.

17. Verfahren nach Anspruch 9, das ferner das Verschlüsseln des Datenstroms vor dem Senden zu der wenigstens einen Bodenstation (14) und das Entschlüsseln des Datenstroms nach dem Empfang an der wenigstens einen Bodenstation (14) beinhaltet.

18. Verfahren nach Anspruch 9, das ferner das Verfolgen und Überwachen von AIS-Sendern (18) durch Integrieren von Daten beinhaltet, die aus der Gruppe bestehend aus AIS-Nachrichtensignalen, optischer und Radar-Verfolgung ausgewählt sind.

## Revendications

1. Système (10) de détection et de décodage de signaux d'un système d'identification automatique, AIS, le système comprenant :

(a) une pluralité de satellites orbitaux, chaque satellite orbital (12) ayant au moins une antenne (32, 33, 46), la au moins une antenne ayant une pluralité de polarisations d'antenne pour recevoir une pluralité de signaux radiofréquence à déplacement de phase, les signaux radiofréquence comprenant un ou plusieurs signaux de messages AIS (500);
(b) chaque satellite orbital (12) ayant aussi un module de communication configuré pour :

(i) accepter la pluralité de signaux radiofréquence à déplacement de phase;
(ii) convertir la pluralité de signaux radiofréquence à déplacement de phase en des données échantillonnées groupées en paquets;
(iii) introduire les données échantillonnées groupées en paquets et une pluralité de paramètres de signaux dans un train de données; et
(iv) transmettre le train de données et un train de données de télémétrie pour le satellite orbital, à au moins une station terrestre (14); et

(c) un processeur (24) situé dans la au moins une station terrestre (14) configuré pour recevoir le train de données; mettre le train de données en corrélation avec une pluralité de signaux prédéfinis pour calculer une pluralité de signaux de corrélation et balayer la pluralité de signaux de corrélation pour des pics de corrélation qui dépassent d'autres pics d'une quantité prédéterminée afin d'identifier un ou plusieurs signaux de messages AIS candidats, **caractérisé en ce que** le processeur comprend :

(i) un module de raffinement (62) configuré pour identifier et retirer un ou plusieurs signaux de messages AIS superposés, l'un ou les plusieurs signaux de messages AIS superposés étant un ou plusieurs signaux de messages AIS candidats superposés par un signal de message candidat dont le pic de corrélation dépasse celui de l'un ou des plusieurs signaux de messages AIS candidats d'une valeur seuil prédéterminée;
(ii) un module de "décollision" (63) configuré pour effectuer la "décollision" de l'un ou des plusieurs signaux de messages AIS superposés en, pour chaque signal de message AIS candidat dans l'un ou les plusieurs signaux de messages AIS superposés, déplaçant par calcul la phase d'un premier segment de signal échantillonné de l'un ou des plusieurs signaux de messages AIS superposés et en le combinant à un deuxième segment de signal échantillonné de l'un ou des plusieurs signaux de messages AIS superposés jusqu'à ce que le déplacement de phase dans le deuxième segment annule ou réduise la force relative d'un signal de message AIS chevauchant pour révéler le signal de message AIS candidat, où le deuxième segment de signal échantillonné est coïncident dans le temps avec le premier segment échantillonné mais reçu à une antenne différente ou à une polarisation d'antenne différente; et
(iii) un décodeur (64) configuré pour décoder l'un ou les plusieurs signaux de messages AIS candidats afin d'obtenir un segment de message AIS.

2. Système selon la revendication 1, dans lequel le processeur (24) détermine aussi la précision de l'un ou des plusieurs signaux de messages AIS candidats, en comparant une position rapportée d'un émetteur AIS (18), la position rapportée étant identifiée dans l'un ou les plusieurs signaux de messages AIS candidats, à une pluralité de positions valides sur la base d'un ou de plusieurs d'entre un décalage Doppler, une polarisation, un timbre horaire et les données de télémétrie associés à l'un ou aux plusieurs signaux de messages AIS candidats.

3. Système selon la revendication 1, dans lequel au moins l'un des paramètres de signaux introduits dans le train de données est un gain de réception pour chacune des polarisations d'antenne.

4. Système selon la revendication 1, dans lequel la pluralité des polarisations d'antenne comprend des doubles polarisations.

5. Système selon la revendication 1, dans lequel la pluralité des polarisations d'antenne comprend trois polarisations.

6. Système selon la revendication 1, dans lequel le processeur (24) est une grappe de calcul haute performance.

7. Système selon la revendication 1, dans lequel la pluralité de satellites orbitaux occupe au moins trois plans orbitaux différents, chacun des trois plans orbitaux ayant des inclinaisons sensiblement différentes et/ou des altitudes sensiblement différentes.

8. Système selon la revendication 1, dans lequel le train de données est chiffré pour la transmission à au moins une station terrestre (14).

9. Procédé de détection et de décodage de signaux d'un système d'identification automatique, AIS, le procédé comprenant :

   (a) fournir une pluralité de satellites orbitaux, chaque satellite orbital (12) ayant au moins une antenne (32, 33, 46), la au moins une antenne ayant une pluralité de polarisations d'antenne pour recevoir une pluralité de signaux radiofréquence à déplacement de phase, les signaux radiofréquence comprenant un ou plusieurs signaux de messages AIS (500) :
   (b) filtrer, échantillonner et grouper en paquets la pluralité de signaux radiofréquence à déplacement de phase dans des données échantillonnées groupées en paquets;
   (c) introduire les données échantillonnées groupées en paquets et une pluralité de paramètres de signaux dans un train de données;
   (d) transmettre le train de données et un train de données de télémétrie pour le satellite orbital (12) à au moins une station terrestre (14);
   (e) recevoir le train de données à la au moins une station terrestre;
   (f) mettre le train de données en corrélation avec une pluralité de signaux prédéfinis pour calculer une pluralité de signaux de corrélation;
   (g) balayer la pluralité de signaux de corrélation pour des pics de corrélation qui dépassent d'autres pics d'une quantité prédéterminée afin d'identifier un ou plusieurs signaux de messages AIS candidats; et
   (h) traiter le train de données à la au moins une station terrestre (14) pour identifier un ou plusieurs signaux de messages AIS candidats
   **caractérisé en ce que** le traitement comprend :

   (i) identifier et retirer un ou plusieurs signaux de messages AIS superposés, l'un ou les plusieurs signaux de messages AIS superposés étant un ou plusieurs signaux de messages AIS candidats superposés par un signal de message candidat dont le pic de corrélation dépasse celui de l'un ou des plusieurs signaux de messages AIS candidats d'une valeur seuil prédéterminée;
   (ii) effectuer la "décollision" de l'un ou des plusieurs signaux de messages AIS superposés en, pour chaque signal de message AIS candidat dans l'un ou les plusieurs signaux de messages AIS superposés, déplaçant par calcul la phase d'un premier segment de signal échantillonné de l'un ou des plusieurs signaux de messages AIS superposés et en le combinant à un deuxième segment de signal échantillonné de l'un ou des plusieurs signaux de messages AIS superposés jusqu'à ce que le déplacement de phase dans le deuxième segment annule ou réduise la force relative d'un signal de message AIS chevauchant pour révéler le signal de message AIS candidat, où le deuxième segment de signal échantillonné est coïncident dans le temps avec le premier segment échantillonné mais reçu à une antenne différente ou à une polarisation d'antenne différente; et
   (iii) décoder l'un ou les plusieurs signaux de messages AIS candidats pour obtenir un segment de message AIS.

10. Procédé selon la revendication 9, comprenant en plus déterminer la précision de l'un ou des plusieurs signaux de messages AIS candidats en comparant une position rapportée d'un émetteur AIS (18), la position rapportée étant identifiée dans l'un ou les plusieurs signaux de messages AIS candidats, à une pluralité de positions valides sur la base d'un ou de plusieurs d'entre un décalage Doppler, une polarisation, un timbre horaire et les données de télémétrie associés à l'un ou aux plusieurs signaux de messages AIS candidats.

11. Procédé selon la revendication 9, dans lequel au moins l'un des paramètres de signaux est un gain de réception pour chacune des polarisations d'antenne.

12. Procédé selon la revendication 9, dans lequel la pluralité de polarisations d'antenne comprend des doubles polarisations.

13. Procédé selon la revendication 9, dans lequel la pluralité de polarisations d'antenne comprend trois polarisations.

14. Procédé selon la revendication 9, comprenant en plus stocker le train de données dans une base de données (80) et traiter les données provenant d'une pluralité de trains de données afin d'identifier un ou plusieurs signaux de messages AIS candidats.

15. Procédé selon la revendication 9, dans lequel le processeur est une grappe de calcul haute performance.

16. Procédé selon la revendication 9, dans lequel la pluralité de satellites orbitaux occupe au moins trois plans orbitaux différents, chacun des trois plans orbitaux ayant des inclinaisons sensiblement différentes et/ou des altitudes sensiblement différentes.

17. Procédé selon la revendication 9, comprenant en plus chiffrer le train de données préalablement à la transmission à la au moins une station terrestre (14) et déchiffrer le train de données suite à sa réception à la au moins une station terrestre (14).

18. Procédé selon la revendication 9, comprenant en plus suivre et contrôler les émetteurs AIS (18) en intégrant des données sélectionnées parmi le groupe consistant en :

signaux de messages AIS, poursuite optique et radar.

FIG. 1

EP 2 211 486 B1

FIG. 2A

FIG. 2B

300

RECEIVING AND PRE-PROCESSING
AIS SIGNALS ⌐102

↓

DETERMINING RECEIVE GAIN ⌐104

↓

DIGITIZING AND PACKETIZING SIGNAL
SEGMENTS ⌐106

↓

MODULATING AND TRANSMITTING RAW
DATA STREAM ⌐108

↓

RECEIVING, DEMODULATING AND
STORING RAW DATA ⌐110

FIG. 3

400

RECEIVING AIS SIGNALS ⌐110

DETERMINING CANDIDATE MESSAGE SIGNALS AND THEIR CORRESPONDING DOPPLER OFFSET, MODULATION INDEX AND TIMING ⌐112

REFINING CANDIDATE MESSAGE SIGNALS ⌐114

DECODING CANDIDATE MESSAGE SIGNALS TO EXTRACT MESSAGE SEGMENT ⌐116

VALIDATING DECODED MESSAGES FOR PROPER AIS FORMATTING ⌐118

STORING VALIDATED DECODED MESSAGES ⌐120

## FIG. 4

500

124 · TRAINING SEQUENCE (24 BITS)

OTHER FIELDS 136

128 · MESSAGE SEGMENT

138 · FCS (16 BITS)

142 · BUFFER (24 BITS)

0 0 ··· | 0 1 0 1 ··· | 0 1 1 1 1 1 1 0 | | | | | 0 1 1 1 1 1 1 0 | 0 0 0 ···

RAMP UP (8 BITS)

START FLAG (8 BITS)

SHIP ID (30 BITS)

LONGITUDE (28 BITS)

LATITUDE (27 BITS)

END FLAG (8 BITS)

122

126

130

132

134

140

EP 2 211 486 B1

FIG. 5

600

```
┌─────────────────────────────────┐
│      RECEIVING SIGNALS           │──110
└─────────────────────────────────┘
                │
                ▼
┌─────────────────────────────────┐
│ DETERMINING CANDIDATE MESSAGE    │──112
│ SIGNALS AND THEIR CORRESPONDING  │
│ DOPPLER OFFSET, MODULATION INDEX │
│ AND TIMING                       │
└─────────────────────────────────┘
                │
                ▼
┌─────────────────────────────────┐
│    REFINING CANDIDATE MESSAGE    │──114
│           SIGNALS                │
└─────────────────────────────────┘
                │
                ▼
┌─────────────────────────────────┐
│   COMBINING CORRESPONDING        │──152
│   CANDIDATE MESSAGE SIGNALS      │
│   FROM DIFFERENT POLARIZATIONS   │
└─────────────────────────────────┘
                │
                ▼
┌─────────────────────────────────┐
│  DECODING CANDIDATE MESSAGE      │──116
│  SIGNALS TO EXTRACT MESSAGE      │
│           SEGMENT                │
└─────────────────────────────────┘
                │
                ▼
┌─────────────────────────────────┐
│  VALIDATING DECODED MESSAGES     │──118
│  FOR PROPER AIS FORMATTING       │
└─────────────────────────────────┘
                │
                ▼
┌─────────────────────────────────┐
│   STORING VALIDATED DECODED      │──120
│           MESSAGES               │
└─────────────────────────────────┘
```

FIG. 6

EP 2 211 486 B1

112'

CORRELATE RECEIVED SIGNALS WITH KNOWN CODE SEQUENCES AT PARTICULAR DOPPLER OFFSETS AND MODULATION INDICES —160

SCAN CORRELATION FUNCTIONS FOR AMPLITUDE PEAKS TO IDENTIFY CANDIDATE MESSAGE SIGNALS —162

**FIG. 7**

114'

SORT ALL CANDIDATE MESSAGE SIGNALS BY TIME —170

REMOVE ALL REPEATED CANDIDATE MESSAGE SIGNALS —172

REMOVING ALL OVERLAPPED SIGNALS ON THEIR HIGH TIME —174

RE-FILTER CANDIDATE MESSAGE SIGNALS —176

**FIG. 8**

CORRELATION SIGNAL - MISMATCH 0.00 dB

FIG. 9A

CORRELATION SIGNAL - MISMATCH 0.50 dB

FIG. 9B

CORRELATION SIGNAL - MISMATCH 1.00 dB

FIG. 9C

## CORRELATION SIGNAL

FIG. 10A

## CORRELATION SIGNAL

FIG. 10B

## CORRELATION SIGNAL

FIG. 10C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008148188 A
- WO 2007143378 A

- WO 03046603 A

**Non-patent literature cited in the description**

- **OLE FREDRIK HAAKONSEN DAHL.** *Space-Based AIS Receiver for Maritime Traffic Monitoring Using Interference Cancellation*